(19) Europäisches Patentamt / European Patent Office / Office européen des brevets

(11) **EP 2 030 367 B1**

(12) **FASCICULE DE BREVET EUROPEEN**

(45) Date de publication et mention de la délivrance du brevet:
**04.07.2018 Bulletin 2018/27**

(21) Numéro de dépôt: **07766095.9**

(22) Date de dépôt: **24.05.2007**

(51) Int Cl.:
*H04L 12/26* (2006.01)    *H04L 12/701* (2013.01)
*H04L 12/721* (2013.01)    *H04L 12/761* (2013.01)
*H04L 12/707* (2013.01)    *H04L 12/703* (2013.01)
*H04L 12/717* (2013.01)    *H04L 12/18* (2006.01)

(86) Numéro de dépôt international:
**PCT/FR2007/051323**

(87) Numéro de publication internationale:
**WO 2007/144527 (21.12.2007 Gazette 2007/51)**

(54) **PROCÉDÉ DE ROUTAGE DE LIENS VIRTUELS DANS UN RÉSEAU À COMMUTATION DE TRAMES**

VERFAHREN ZUM ROUTEN VIRTUELLER VERBINDUNGEN IN EINEM FRAME-SWITCHING-NETZ

METHOD OF ROUTING VIRTUAL LINKS IN A FRAME-SWITCHING NETWORK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.06.2006 FR 0652093**
          **30.01.2007 FR 0752972**

(43) Date de publication de la demande:
**04.03.2009 Bulletin 2009/10**

(73) Titulaire: **AIRBUS OPERATIONS**
**31060 Toulouse (FR)**

(72) Inventeurs:
• **MINOT, Frédéric**
**31810 Venerque (FR)**
• **CABARET, Rémi**
**31300 Toulouse (FR)**

• **Les autres inventeurs ont renoncé au droit d'être mentionnés en tant que tels.**

(74) Mandataire: **Ilgart, Jean-Christophe et al**
**BREVALEX**
**95, rue d'Amsterdam**
**75378 Paris Cedex 8 (FR)**

(56) Documents cités:
**US-A1- 2005 083 936**     **US-A1- 2006 083 251**
**US-B1- 6 584 093**

• **DHARANIKOTA S ET AL: "Inter-domain routing with Shared Risk Groups" IETF STANDARD-WORKING-DRAFT, INTERNET ENGINEERING TASK FORCE, IETF, CH, juillet 2001 (2001-07), XP015032068 ISSN: 0000-0004**

EP 2 030 367 B1

**Description**

**DOMAINE TECHNIQUE**

La présente invention concerne le domaine du routage dans un réseau à commutation de trames et plus particulièrement dans un réseau AFDX.

**ÉTAT DE LA TECHNIQUE ANTÉRIEURE**

Les réseaux Ethernet sont les plus connus des réseaux locaux. Ils peuvent fonctionner sous deux modes distincts mais compatibles entre eux : un mode dit partagé, dans lequel un même support physique est partagé entre les terminaux, avec accès aléatoire et détection de collisions entre trames, et un mode dit commuté, dans lequel les terminaux s'échangent des trames au moyen de liaisons virtuelles, garantissant ainsi l'absence de collisions.

Dans un réseau Ethernet commuté, chaque terminal, source ou destinataire, est relié individuellement à un commutateur de trames et les commutateurs sont reliés entre eux par des liaisons physiques. Plus précisément, chaque commutateur possède une pluralité de ports connectés aux ports d'autres commutateurs ou des coupleurs de terminaux. Une liaison virtuelle entre un terminal source et un terminal destinataire est définie comme un chemin à travers le réseau parcouru par les trames du terminal source à destination du terminal destinataire. De manière équivalente, une liaison virtuelle est définie par la liste des commutateurs que ces trames traversent. Pour chaque commutateur traversé, la commutation de trames est réalisée à partir de l'adresse du destinataire, au moyen d'une table de commutation préétablie. Cette table de commutation est très simple puisqu'elle indique en fonction du port d'entrée du commutateur et de l'adresse de destination de la trame, le port de sortie correspondant.

Un autre exemple bien connu de réseau à commutation de trames est le réseau ATM dans lequel une connexion de circuit virtuel (VCC) peut être établie pour acheminer des trames élémentaires ou cellules entre un terminal source et destinataire.

Nous désignerons par la suite « lien virtuel » une connexion de bout en bout de niveau 2 dans un réseau à commutation de trames, telle qu'une liaison virtuelle dans un réseau Ethernet commuté ou une connexion de circuit virtuel dans un réseau ATM. Dans un réseau à commutation de trames, les liens virtuels sont routés à travers le réseau, soit de manière administrative, soit par voie de signalisation passant par le plan de contrôle. Le routage des liens consiste à définir et à programmer les tables de commutation des différents commutateurs du réseau. De manière générale, ces tables de commutation peuvent être statiques (routage administratif) ou dynamique (routage par signalisation) .

Dans certains cas, il est possible d'obtenir une certaine garantie de service par lien virtuel. Par exemple, dans un réseau ATM, la classe de service CBR (*Constant Bit Rate*) permet de réserver une bande passante fixe et un débit minimal sur le lien. Cependant, comme les commutateurs ne peuvent supporter qu'un débit maximal donné, cette garantie de service impose des contraintes sur le routage des liens.

De manière similaire, le réseau AFDX (*Avionics Full Duplex Switched Ethernet*), développé pour les besoins de l'aéronautique, est un réseau Ethernet commuté dans lequel il est possible d'effectuer une réservation de bande passante par lien virtuel. Plus précisément, à chaque lien virtuel est associé un intervalle minimal entre trames ainsi qu'une taille maximale de trame. De surcroît, un temps maximal d'acheminement des trames ou temps de latence est garanti pour chaque lien virtuel. Etant donné que les commutateurs ne peuvent assurer qu'un débit donné par port de sortie, la garantie des caractéristiques des liens virtuels passe là encore par des contraintes de routage.

La présente invention s'applique préférentiellement mais non exclusivement au réseau AFDX. On trouvera une description détaillée de ce réseau dans le document intitulé « AFDX protocol tutorial » disponible sur le site www.condoreng.com ainsi que dans la demande de brevet FR-A-2832011 déposée au nom de la demanderesse. Ses principales caractéristiques seront simplement rappelées ci-après.

Comme préalablement mentionné, le réseau AFDX est basé sur un réseau Ethernet commuté. Il est en outre de type full-duplex, chaque terminal pouvant simultanément émettre et recevoir des trames sur des liens virtuels distincts. Le réseau AFDX est aussi déterministe, au sens où les liens virtuels ont des caractéristiques garanties en termes de temps de latence, de ségrégation physique de flux, de bande passante et de débit. Chaque lien virtuel dispose pour ce faire d'un chemin réservé de bout en bout, d'une fragmentation temporelle en intervalles de transmission (dénommés BAG pour *Bandwidth Allocation Gap*) et d'une taille de trame maximale. Les trames sont envoyées en début de chaque intervalle de transmission avec une tolérance de gigue prédéterminée. Enfin le réseau AFDX est redondant, au sens où il est dupliqué pour des raisons de disponibilité.

Les données sont transmises sous forme de paquets IP encapsulés dans des trames Ethernet. A la différence de la commutation Ethernet classique (utilisant l'adresse Ethernet du destinataire), la commutation de trames sur un réseau AFDX utilise un identificateur de lien virtuel concaténé à l'entête de trame. Lorsqu'un commutateur reçoit sur l'un des ses ports d'entrée une trame, il lit l'identificateur de lien virtuel et détermine à partir de sa table de commutation le ou les port(s) de sortie sur le(s)quel(s) elle doit être transmise. Les commutateurs vérifient au vol l'intégrité des trames transmises mais ne demandent pas de retransmission si une trame est erronée : les trames détectées comme erronées sont éliminées. Les trames transitant sur un lien virtuel sont numérotées en séquence. A la réception, le terminal destinataire vérifie l'intégrité de la séquence des trames.

Chaque lien virtuel est mono-directionnel. Il ne peut être issu que d'un terminal source à la fois mais peut aboutir à plusieurs destinataires. On distingue les liens virtuels en mode point à point, ne desservant qu'un seul destinataire, des liens virtuels en mode multi-point qui en desservent plusieurs.

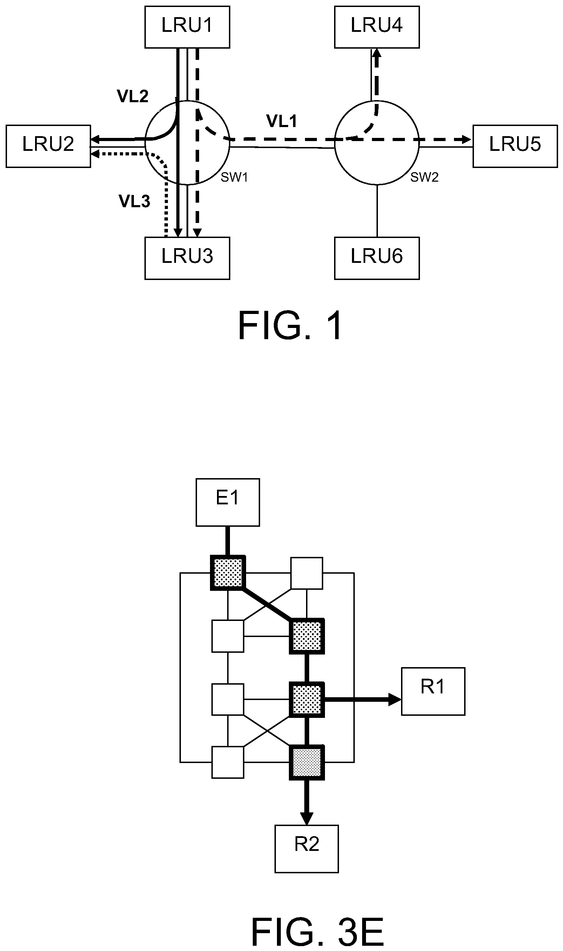

La Fig. 1 représente schématiquement un réseau AFDX comprenant des terminaux LRU1 à LRU5 et des commutateurs de trames SW1, SW2. On voit que le lien virtuel $VL_3$ reliant le terminal LRU3 à LRU2 est de type point à point alors que les liens virtuels $VL_2$ desservant LRU2 et LRU3, et $VL_1$ desservant LRU3 à LRU5 sont de type multipoint.

Certains liens virtuels sont fortement dépendants entre eux car ils participent à la réalisation d'une même fonction. Par exemple, les liens virtuels issus de différents capteurs de navigation d'un aéronef participent à la même fonction de positionnement. On appelle par la suite faisceau fonctionnel ou simplement faisceau tout ensemble de liens virtuels, de type point à point ou multipoint, participant à la réalisation d'une même fonction.

Les réseaux à commutation de trames offrant une garantie de service, comme les réseaux ATM et AFDX, nécessitent d'imposer des contraintes de routage des liens virtuels. De surcroît, les applications embarquées, en particulier les applications aéronautiques requièrent des précautions supplémentaires se traduisant à leur tour bien souvent en contraintes de routage.

Jusqu'à présent, le routage de liens dans un réseau AFDX était effectué de manière empirique. Ce type de routage peut être acceptable pour un nombre de liens virtuels relativement faible. Avec l'accroissement de la complexité des systèmes aéronautiques, le nombre de liens virtuels peut désormais atteindre plusieurs milliers. La présente invention vise à offrir un procédé de routage systématique et automatique qui tienne compte de l'ensemble des contraintes de routage et permette d'optimiser la sécurité d'utilisation du réseau.

US 6 584 093 B1 concerne une méthode de routage d'appels téléphoniques sur IP dans un réseau étendu avec routage inter-domaine. Le choix du meilleur chemin est effectué en minimisant une métrique qui est une fonction des coûts élémentaires encourus au niveau de chaque système autonome. Lorsqu'un bond local vers le système système autonome suivant est impossible, un chemin comprenant cette entité est ignoré dans le routage d'appel.

## EXPOSÉ DE L'INVENTION

La présente invention est définie par un procédé de routage de liens virtuels dans un réseau à commutation de trames comprenant une pluralité de terminaux sources et/ou destinataires desdites trames, des commutateurs de trames étant reliés entre eux par des liaisons physiques, chaque lien virtuel étant défini, pour un type point à point, par un chemin à travers ledit réseau entre un terminal source et un terminal destinataire et, pour un type multipoint, par une pluralité de chemins à travers ledit réseau entre un terminal source d'une part et une pluralité de terminaux destinataires, d'autre part. Ledit procédé comprend les étapes suivantes pour au moins un lien virtuel :

(a) sélection parmi un ensemble de chemins possibles entre le terminal source et le ou les terminal(aux) destinataire(s), d'un sous-ensemble de chemins satisfaisant à au moins une contrainte topologique prédéterminée ;
(b) détermination parmi ledit sous-ensemble, d'un chemin, pour un lien virtuel de type point à point ou d'une pluralité de chemins, pour un lien virtuel de type multipoint, minimisant au moins une fonction de coût donnée ;
(c) routage dudit lien virtuel selon le ou les chemin(s) ainsi déterminé(s).

Selon une première variante, lorsque ledit lien virtuel est un lien point à point et le réseau étant partitionné en zones distinctes, ladite contrainte topologique s'exprime avantageusement comme une contrainte de non franchissement de frontière entre zones si les commutateurs reliés respectivement au terminal source et au terminal destinataire appartiennent à la même zone, et, dans le cas contraire, comme une contrainte de franchissement unique de la frontière entre les zones d'appartenance respectives desdits terminaux source et destinataire. L'étape de sélection peut prendre en compte des contraintes topologiques additionnelles de ségrégation et/ou de collocation des chemins possibles vis-à-vis de liens virtuels déjà routés ou à router simultanément avec ledit lien ou de commutateurs dudit réseau. Alternativement ou cumulativement, l'étape de sélection pourra prendre en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

Ladite fonction de coût précitée peut être choisie égale au nombre de commutateurs traversés par un chemin.

Selon une seconde variante, lorsque ledit lien virtuel est de type multipoint et le réseau est partitionné en zones distinctes, on applique avantageusement à chaque chemin possible entre ledit terminal source et un terminal destinataire dudit lien, une contrainte de non franchissement de frontière entre zones si les commutateurs reliés respectivement au terminal source et audit terminal destinataire appartiennent à la même zone et, dans le cas contraire, une contrainte de franchissement unique de la frontière entre les zones d'appartenance respectives desdits terminaux source et destinataire. Comme précédemment, on peut appliquer pour chacun des chemins possibles entre ledit terminal source et un terminal destinataire dudit lien, des contraintes topologiques additionnelles de ségrégation et/ou de collocation de ces chemins vis-à-vis de liens virtuels déjà routés ou à router simultanément avec ledit lien ou de commutateurs. Alternativement ou cumulativement, l'étape de sélection pourra prendre en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

La fonction de coût pourra être prise égale au nombre de commutateurs traversés par un chemin et sera minimisée sur chaque ensemble de chemins possibles entre ledit terminal source et un terminal destinataire dudit lien, pour fournir au moins un chemin candidat par terminal destinataire. Avantageusement, on effectue des combinaisons de K chemins candidats où K est le nombre de terminaux destinataires du lien, chaque combinaison correspondant à une solution possible de routage dudit lien multipoint, un seconde fonction de coût est minimisée sur l'ensemble desdites solutions possibles ainsi obtenues. Cette seconde fonction de coût évalue, pour chaque solution possible, le nombre de commutateurs partagés entre ses différents chemins constitutifs.

Selon une troisième variante, pour au moins un groupe de liens participant à la réalisation d'une même fonction, dit faisceau de liens, chaque lien étant point à point et le réseau étant partitionné en zones distinctes, on applique pour chacun des liens dudit faisceau, à chaque chemin possible entre le terminal source et le terminal destinataire dudit lien, une contrainte de non franchissement de frontière entre zones si les commutateurs reliés respectivement au terminal source et au terminal destinataire appartiennent à la même zone, et, dans le cas contraire, une contrainte de franchissement unique de la frontière entre les zones d'appartenance respectives desdits terminaux source et destinataire. Comme précédemment, on peut appliquer pour chaque lien virtuel et pour chacun des chemins possibles entre le terminal source et le terminal destinataire dudit lien, des contraintes topologiques additionnelles de ségrégation et/ou de collocation de ces chemins vis-à-vis de liens virtuels déjà routés ou à router simultanément avec ledit lien ou de commutateurs. Alternativement ou cumulativement, l'étape de sélection pourra prendre en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

Ladite fonction de coût pourra être prise égale au nombre de commutateurs traversés par un chemin et sera minimisée, pour chacun des liens dudit faisceau, sur chaque ensemble de chemins possibles entre le terminal source et le terminal destinataire dudit lien, pour fournir au moins un chemin candidat par lien. Avantageusement, on effectue des combinaisons de N chemins candidats où N est le nombre de liens dudit faisceau, chaque combinaison correspondant à une solution possible de routage dudit faisceau, une troisième fonction de coût est minimisée sur l'ensemble desdites solutions possibles ainsi obtenues. La troisième fonction de coût évalue, pour chaque solution possible de routage du faisceau, le nombre de commutateurs partagés entre les chemins dont ladite solution est la combinaison.

Selon une quatrième variante, pour au moins un groupe de liens participant à la réalisation d'une même fonction, dit faisceau de liens, chaque lien étant de type multipoint et le réseau étant partitionné en zones distinctes, on applique pour chacun des liens dudit faisceau, à chaque chemin possible entre le terminal source et un terminal destinataire dudit lien, une contrainte de non franchissement de frontière entre zones si les commutateurs reliés respectivement au terminal source et au terminal destinataire appartiennent à la même zone, et, dans le cas contraire, une contrainte de franchissement unique de la frontière entre les zones d'appartenance respectives desdits terminaux source et destinataire. Comme précédemment, on pourra appliquer, pour chaque lien virtuel et pour chacun des chemins possibles entre le terminal source et un terminal destinataire dudit lien, des contraintes topologiques additionnelles de ségrégation et/ou de collocation de ces chemins vis-à-vis de liens virtuels déjà routés ou à router simultanément avec ledit lien ou de commutateur dudit réseau. Alternativement ou cumulativement, l'étape de sélection pourra prendre en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

Ladite fonction de coût pourra être prise égale au nombre de commutateurs traversés par un chemin et sera minimisée, pour chacun des liens dudit faisceau, sur chaque ensemble de chemins possibles entre le terminal source et chaque terminal destinataire dudit lien, pour fournir au moins un chemin candidat par lien et par terminal destinataire. Avantageusement, on effectue des combinaisons de $K_1+K_2+...+K_N$ chemins candidats où les $K_i$, $1<i\leq N$ sont les nombres de chemins respectifs des N liens dudit faisceau, chaque combinaison correspondant à une solution possible de routage dudit faisceau, et une quatrième fonction de coût est minimisée sur l'ensemble desdites solutions possibles ainsi obtenues. La quatrième fonction de coût évalue, pour chaque solution possible de routage du faisceau, le nombre de commutateurs traversés par les liens du faisceau correspondant à cette solution.

Dans toutes les variantes ci-dessus, lesdites zones du réseau sont par exemple alimentées par des sources d'alimentation indépendantes.

Enfin, quelle que soit la variante, on minimisera avantageusement une cinquième fonction de coût évaluant la charge de trafic du commutateur le plus chargé du réseau, sur l'ensemble des solutions de routage obtenues par minimisation de l'une des seconde, troisième ou quatrième fonctions de coût.

L'invention concerne également un programme d'ordinateur comprenant des moyens logiciels adaptés à mettre en oeuvre les étapes du procédé défini plus haut, lorsqu'il est exécuté par un ordinateur.

## BRÈVE DESCRIPTION DES DESSINS

La Fig. 1 représente schématiquement un exemple de réseau AFDX ;

la Fig. 2 représente schématiquement un organigramme de la méthode de routage de liens virtuels selon un mode de réalisation de l'invention ;

les Figs. 3A à 3E illustrent un mécanisme de minimisation de fonctions de coût dans le cas d'un lien virtuel du type multipoint ;

la Fig. 4 illustre un exemple de routage pour un lien virtuel de type point à point ;

la Fig. 5 illustre un exemple de routage pour un lien virtuel de type multipoint ;

la Fig. 6 illustre un exemple de routage pour un faisceau de liens virtuels de type point à point ;

la Fig. 7 illustre un exemple de routage pour un faisceau de liens virtuels de type multipoint ;

la Fig. 8 illustre un exemple de groupe de chemins constitutifs de liens virtuels, assujetti à une contrainte de ségrégation relaxée ;

la Fig. 9 illustre un exemple de routage de liens virtuels sous contrainte de ségrégation relaxée ;

les Figs. 10A et 10B illustrent respectivement une configuration de routage acceptable et une configuration de routage inacceptable.

## EXPOSÉ DÉTAILLÉ DE MODES DE RÉALISATION PARTICULIERS

L'idée à la base de l'invention est d'effectuer le routage d'un lien virtuel en sélectionnant parmi les chemins possibles, ceux qui obéissent à une contrainte ou à une pluralité de contraintes topologiques prédéterminées, puis de sélectionner ensuite parmi ceux-ci, celui ou ceux qui minimise(nt) une fonction de coût prédéterminée.

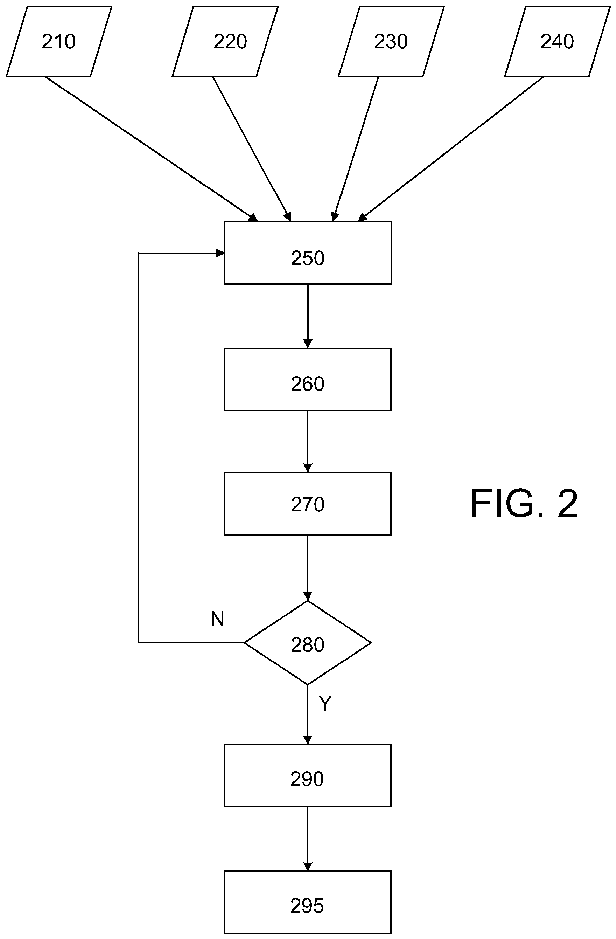

La Fig. 2 illustre le principe du procédé de routage selon l'invention.

Ledit procédé utilise en entrée :

- un fichier 210 décrivant la topologie du réseau, à savoir les noeuds extrémaux (terminaux), les noeuds de commutation, les liaisons physiques entre les noeuds ;
- un fichier 220 donnant l'état du réseau, à savoir les capacités des ports des commutateurs, les liens virtuels déjà routés avec leurs caractéristiques ;
- un fichier 230 donnant les caractéristiques du ou des liens virtuels à router. Chaque lien virtuel y est décrit par les identificateurs des commutateurs reliés respectivement au terminal source et au terminal destinataire (mode point à point) ou aux terminaux destinataires (mode multipoint), la durée de l'intervalle de transmission (BAG) et la longueur maximale des trames sur le lien, l'appartenance éventuelle à un faisceau fonctionnel et, le cas échéant, l'identificateur du faisceau ;
- un fichier 240 de déclaration de contraintes topologiques qui sera décrit en détail plus loin.

L'algorithme procède en une première étape 250 à la sélection des chemins entre le terminal source et le terminal destinataire qui satisfont à une contrainte ou une pluralité de contraintes topologiques indiquée(s) en 240.

L'algorithme procède dans un deuxième temps, en 260, à la minimisation d'une fonction de coût ou à la minimisation d'une pluralité de fonctions de coût, successivement ou conjointement. Aux fins de minimisation conjointe, comme détaillé plus loin, une fonction de coût composite est construite comme combinaison linéaire des fonctions de coût précitées, les coefficients de pondération étant choisis de manière à refléter les importances relatives des coûts dans le choix du routage. Alternativement, les fonctions de coût sont minimisées l'une après l'autre selon un ordre de priorité décroissante, chaque minimisation étant effectuée sur le sous-ensemble de solutions fournies par l'étape de minimisation précédente.

Si la minimisation de la fonction de coût/des fonctions de coût donne plusieurs solutions équivalentes, une solution est choisie de manière arbitraire parmi celles-ci. La solution en sortie de 260 fournit le chemin (mode point à point) ou les chemins (mode multipoint) permettant de router le lien virtuel. A l'étape 270, le fichier d'état du réseau 220 est mis à jour. L'algorithme procède de manière itérative, jusqu'à épuisement des liens virtuels à router.

En 280, on vérifie si tous les liens virtuels sont routés et, dans l'affirmative, on procède, selon un mode de réalisation, à une étape de vérification du déterminisme du réseau en 290. Cette étape est prise en charge par un algorithme dénommé « network calculus » connu de l'état de la technique, par exemple de l'article de Jean-Yves Le Boudec intitulé « Application of network calculus to garanteed service networks » publié dans IEEE Trans. on Information Theory, Vol. 44, n° 3, Mai 1998. Cet algorithme calcule à partir d'une enveloppe de trafic en tous les points du réseau, les bornes de latence et les tailles de files d'attente pour chaque élément du réseau. Le déterminisme est garanti pour une latence bornée et un dimensionnement correct des files d'attente pour chaque élément du réseau.

En dernier lieu, les tables de commutation des commutateurs de trame sont mises à jour en 295. Ces tables de commutation fixent de manière univoque le routage des liens sur le réseau.

Le procédé de routage peut être mis en oeuvre une première fois lors de la mise en fonctionnement du réseau et/ou à chaque fois qu'un lien virtuel doit être modifié ou ajouté.

Les contraintes topologiques mentionnées plus haut sont de deux types distincts : les contraintes absolues et les contraintes relatives.

Les contraintes absolues pèsent sur le routage d'un lien virtuel indépendamment de la présence d'autres liens sur le réseau. Par exemple, dans le cas d'un réseau AFDX embarqué sur un aéronef, les « côtés » gauche et « droit » du réseau, correspondant aux côtés « gauche » et « droit » de l'avion, sont alimentés par des barres d'alimentation différentes. Afin que la défaillance d'une alimentation ne mette pas en péril l'entièreté du réseau, les contraintes topologiques suivantes sont imposées :

- un lien virtuel issu d'un terminal source situé d'un côté du réseau et aboutissant à un terminal destinataire situé du côté opposé ne peut traverser qu'une fois la frontière séparant les deux côtés du réseau. Si le lien virtuel est de type multipoint, la contrainte s'applique à chaque chemin constitutif du lien ;
- un lien virtuel issu d'un terminal source situé d'un côté du réseau et desservant un terminal destinataire situé du même côté ne peut pas traverser la frontière séparant les deux côtés du réseau.

Cette règle se généralise sans peine au cas où le réseau peut être partitionné en une pluralité quelconque de zones distinctes, sous réserve qu'un terminal quelconque d'une zone puisse desservir un terminal quelconque d'une autre zone sans passer par une zone tierce. Les différentes zones du réseau sont par exemple alimentées par des sources d'alimentation indépendantes. Les liens virtuels intra-zone sont routés au sein de la zone en question alors que les liens virtuels inter-zone ne franchissent qu'une seule fois la frontière séparant lesdites zones, ce sans passer par une zone tierce.

D'autres contraintes topologiques absolues peuvent être fixées comme la collocation ou la ségrégation avec un élément du réseau. On entend par là qu'il pourra être spécifié que le lien virtuel passe nécessairement par un élément donné du réseau (par exemple un commutateur ou une liaison physique) ou bien au contraire évite nécessairement cet élément. On conçoit que la collocation avec plusieurs éléments du réseau puisse conduire à un routage univoque du lien virtuel. Le lien virtuel est alors dit « fixé ».

Les contraintes topologiques relatives concernent les liens virtuels entre eux. Ainsi, on pourra fixer des contraintes de collocation ou de ségrégation entre liens virtuels. On entend par là qu'il pourra être spécifié que deux liens virtuels doivent passer par les mêmes commutateurs du réseau ou bien au contraire que ceux-ci ne doivent partager aucun commutateur commun. Les contraintes topologiques relatives peuvent concerner différents liens virtuels d'un même faisceau fonctionnel, auquel cas la contrainte posée est une contrainte de ségrégation. Elles peuvent aussi concerner des liens virtuels appartenant à des faisceaux fonctionnels distincts. Dans les deux cas, les contraintes topologiques de collocation/ségrégation d'un lien virtuel peuvent être exprimées vis-à-vis de liens déjà routés ou de liens à router simultanément avec ledit lien.

Il arrive que les contraintes topologiques relatives libellées en termes de collocation et/ou de ségrégation soient trop strictes pour permettre d'obtenir une solution de routage. Dans ce cas, certaines de ces contraintes voire toutes sont relaxées comme indiqué ci-après.

On considère un ensemble de liens virtuels dont le routage est réalisé simultanément, leur routage individuel ne pouvant être envisagé de manière indépendante. Chacun de ces liens virtuels comprend en général un (lien point à point) ou plusieurs (lien multipoint) chemin(s). L'ensemble des chemins constitutifs de ces liens virtuels, ci-après dénommé groupe de liens virtuels, peut être partitionné en sous-groupes, un chemin pouvant appartenir à plusieurs sous-groupes. Généralement un sous-groupe correspond à une instance de la fonction assurée par ledit ensemble de liens virtuels. En d'autres termes, les différents sous-groupes représentent un certain degré de redondance pour la réalisation d'une même fonction.

Si $N_{sg}$ est le nombre de sous-groupes du groupe de chemins, on impose au dit ensemble de liens virtuels une contrainte de ségrégation relaxée selon laquelle au plus $n_{sg}$ sous-groupes parmi $N_{sg}$, avec $0 \leq n_{sg} < N_{sg}$, peuvent être invalidés par la défaillance d'un commutateur. Le cas $n_{sg}=0$ correspond à la situation particulière où l'on ne tolère aucun sous-groupe invalidé. Par défaillance d'un commutateur, on entend ici soit une commutation erronée ou absente, soit une corruption des trames commutées. Par sous-groupe invalidé, on entend un sous-groupe dont tous les chemins sont affectés par la défaillance du même commutateur.

On comprendra qu'une contrainte de ségrégation relaxée offre plus de souplesse qu'une contrainte de ségrégation dans la mesure où elle prend en compte la redondance du réseau et ne s'applique pas de manière indifférenciée à tous les chemins constitutifs d'un lien virtuel.

Des exemples de contraintes de ségrégation relaxées sont donnés en annexe.

Comme on l'a vu plus haut, après avoir sélectionné un sous-ensemble de candidats possibles satisfaisant aux contraintes topologiques précitées, l'algorithme de routage recherche parmi les candidats possibles celui ou ceux qui minimise(nt) une ou plusieurs fonctions de coût.

Une première fonction de coût envisagée est le nombre de commutateurs traversés par le lien virtuel. Plus précisément, si le lien est de type point à point, on cherche à minimiser le nombre de commutateurs traversés par ce lien. Si le lien est de type multipoint, la minimisation porte sur le nombre de commutateurs traversés pour chacun des chemins constitutifs du lien. Un faible nombre de commutateurs traversés permet de réduire la probabilité de défaillance du lien virtuel ou de chaque chemin constitutif de ce lien.

Une seconde fonction de coût concerne les liens virtuels de type multipoint. Elle est définie comme le nombre de commutateurs communs aux chemins constitutifs d'un lien de type multipoint.

Une troisième fonction de coût concerne les faisceaux de liens. Elle est définie comme le nombre de commutateurs communs aux liens virtuels appartenant à un même faisceau.

La minimisation de la seconde ou de la troisième fonction de coût permet, selon le cas, de réduire la probabilité de défaillance conjointe des chemins d'un même lien virtuel ou des liens virtuels d'un même faisceau.

Une quatrième fonction de coût concerne également les faisceaux de liens. Elle est définie comme le nombre total de commutateurs traversés par tous les liens virtuels d'un même faisceau.

Une cinquième fonction de coût est définie comme le débit du port de sortie du commutateur le plus chargé du réseau. La minimisation de cette fonction de coût vise à répartir au mieux la charge de trafic au sein du réseau.

Ces exemples de fonctions de coût ne sont en aucun cas limitatifs. D'autres fonctions de coût peuvent être envisagées, dans la mesure où elles visent notamment à quantifier l'impact de la défaillance d'un élément ou d'une pluralité d'éléments du réseau.

La minimisation successive des fonctions de coût peut conduire à un ensemble de solutions sous-optimales. Selon une variante de réalisation, on construit une combinaison linéaire des fonctions de coût au moyen de coefficients de pondération reflétant l'importance relative de ces fonctions dans le routage et l'on minimise la nouvelle fonction de coût ainsi construite sur l'ensemble des solutions possibles. De manière similaire, la nouvelle fonction de coût peut être construite comme produit des fonctions de coût, chacune étant affectée d'un exposant reflétant son importance relative dans le routage.

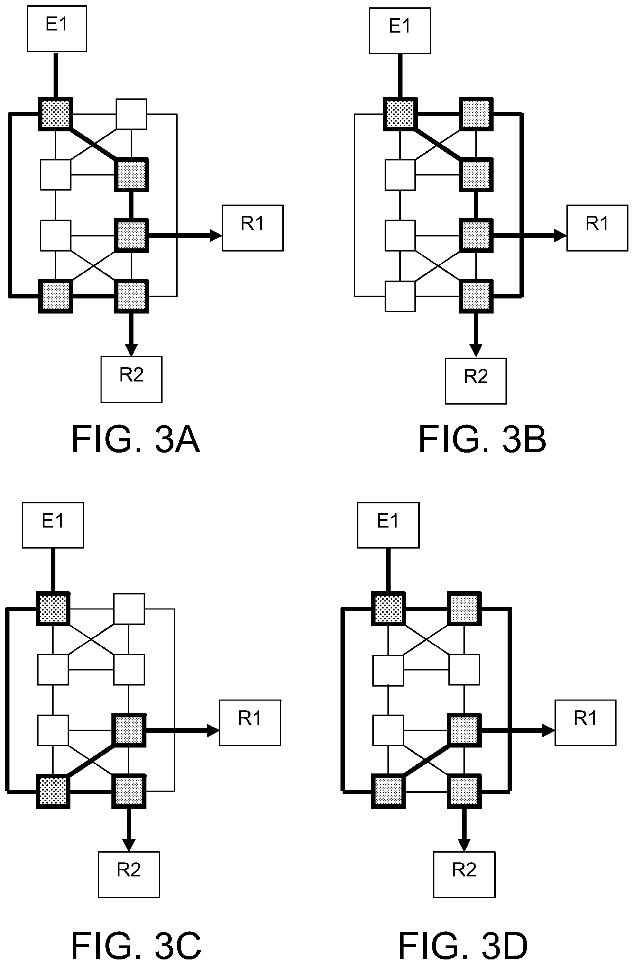

Les Figs. 3A à 3E illustrent le mécanisme de minimisation des fonctions de coût dans le cas d'un lien virtuel du type multipoint.

Le lien virtuel à router est issu du terminal source $E_1$ et dessert les terminaux destinataires $R_1$ et $R_2$. On suppose que les chemins satisfaisants aux contraintes topologiques ont été préalablement sélectionnés. La minimisation de la première fonction de coût s'effectue en recherchant pour chacun des chemins possibles reliant $E_1$ à $R_1$ d'une part et $E_1$ à $R_2$, d'autre part, ceux qui traversent le nombre minimum de commutateurs. Dans le cas présent, le nombre minimum est de 3 pour le chemin $E_1$-$R_1$ comme pour le chemin $E_1$-$R_2$. Les solutions optimales sont illustrées en Fig. 3A à 3D. *A contrario,* on notera que la solution illustrée en Fig. 3E n'est pas optimale : en effet, elle minimise le nombre de commutateurs sur l'ensemble du lien virtuel mais non sur chacun de ses chemins constitutifs (le chemin reliant $E_1$-$R_2$ est de coût 4).

La minimisation de la deuxième fonction de coût conduit à retenir parmi les quatre solutions précédentes, celles illustrées en Figs. 3A, 3B et 3D. En effet pour celles-ci, le nombre de commutateurs communs entre les deux chemins est égal à 1 alors qu'il est égal à 2 pour celle de la Fig. 3C.

La minimisation de la cinquième fonction de coût permet de départager les trois solutions retenues à l'étape précédente. A défaut, la solution choisie est choisie de manière arbitraire parmi les solutions restantes.

Le problème du routage revient à celui d'une minimisation d'une fonction de coût/de fonctions de coût sous contraintes. Avantageusement, les fonctions de coût sous contraintes sont exprimées sous forme d'inégalités linéaires et les fonctions de coût sont des expressions linéaires de variables de décision. La minimisation peut alors être effectuée grâce à l'algorithme du simplexe. On rappelle que l'algorithme du simplexe permet de résoudre un problème du type :

$$Arg\min_{\mathbf{x}}\left(\mathbf{b}^{\mathrm{T}}\mathbf{x}\right) \text{ avec } \mathbf{Ax} \geq \mathbf{c} \text{ et } \mathbf{x} \geq \mathbf{0} \tag{1}$$

où $\mathbf{b}^{\mathrm{T}}$ est le vecteur représentatif d'une forme linéaire (fonction de coût), $\mathbf{x}$ est le vecteur des variables de décision (positives), $\mathbf{A}$ représente la matrice des contraintes et $\mathbf{c}$ est un vecteur constant.

En pratique, l'algorithme de routage dispose en entrée de la liste des commutateurs, notée **SS** et, pour chaque couple de terminaux source et destination, de la liste des chemins permettant de passer du premier au second, chaque chemin étant décrit par une liste ordonnée des commutateurs qu'il traverse. On notera dans la suite par **PP** la liste des chemins répertoriés. Avantageusement, **PP** sera préalablement réduit à une liste de chemins satisfaisant déjà certaines contraintes topologiques absolues, par exemple celles relatives à la partition en zones indépendantes.

On construit alors les matrices $\mathbf{C_{ps}}, \mathbf{C_{fs}}, \mathbf{C_{ls}}, \mathbf{C_{pss}}$ les trois premières étant de dimension $PxS$ et la dernière de dimension $PxSxS$ où $P$ est le nombre total de chemins répertoriés dans le fichier et $S$ est le nombre total de commutateurs du réseau, les éléments de ces matrices étant définis par :

$c_{\mathbf{ps}}(p,sw)=1$ si $sw$ appartient au chemin $p$ et $c_{\mathbf{ps}}(p,sw)=0$ sinon ;
$c_{\mathbf{fs}}(p,sw)=1$ si $sw$ est le premier commutateur de $p$ et $c_{\mathbf{fs}}(p,sw)=0$ sinon ;
$c_{\mathbf{ls}}(p,sw)=1$ si $sw$ est le dernier commutateur de $p$ et $c_{\mathbf{ls}}(p,sw)=0$ sinon ;
$c_{\mathbf{pss}}(p,sw_1,sw_2)=1$ si $sw_1$ et $sw_2$ sont des commutateurs successifs du chemin $p$ et $c_{\mathbf{pss}}(p,sw_1,sw_2)=0$ sinon ;
où $p$ est l'identificateur d'un chemin entre les deux terminaux et où $sw,sw_1,sw_2$ sont les identificateurs de commutateurs du réseau.

Pour simplifier l'algorithme de routage on considère que tout lien virtuel fait partie d'un faisceau fonctionnel, le faisceau pouvant se réduire le cas échéant à un seul lien. On note **FF** la liste des faisceaux fonctionnels.

Un faisceau $f$ de **FF** est déterminé par ses attributs :

- *f.profile* indiquant si le faisceau $f$ contient un seul lien virtuel (*f.profile*=1) ou non (*f.profile*=0) ;
- *f.ocs* donnant la liste des identificateurs des liens virtuels faisant partie du faisceau.

Un lien virtuel *vl* d'un faisceau $f$ est défini par ses attributs :

- *vl.f* donnant l'identificateur du faisceau auquel le lien appartient ;
- *vl.cost* indiquant le coût en terme de trafic sur le lien virtuel ; ce coût peut être exprimé par exemple en fonction du couple intervalle de transmission et longueur maximale de trame ;
- *vl.rted* indiquant si le lien est déjà routé (*vl.rted*=1) ou non (*vl.rted*=0);
- *vl.txsw* donnant l'identificateur du commutateur relié au terminal source ;
- *vl.rxsw* donnant l'identificateur du commutateur relié au terminal destinataire (lien de type point à point) ou les identificateurs des commutateurs respectivement reliés aux terminaux destinataires (lien multipoint).

Un chemin $b$ constitutif d'un lien virtuel *vl* est défini par ses attributs :

- *b.vl* identificateur du lien virtuel auquel il appartient ;
- *b.swDest* identificateur du commutateur relié au terminal destinataire desservi par ledit chemin.

Par ailleurs, on note **GG** la liste des groupes de chemins constitutifs de liens virtuels soumis à une contrainte de ségrégation relaxée. Chaque groupe g de **GG** est défini par :

- un attribut *g.sgErrmax* indiquant le nombre maximum acceptable de sous-groupes invalidés dans le groupe ;
- la liste de ses sous-groupes *g.sglist*.

Enfin, on note **SG** la liste des sous-groupes relatifs aux différents groupes de **GG**. Chaque sous-groupe *sg* de **SG** est défini par :

- un attribut *sg.group* indiquant le groupe auquel il appartient ;
- la liste *sg.pathlist* des chemins constitutifs de ce sous-groupe.

On introduit d'autre part les variables de décision suivantes, toutes à valeurs positives :

- vlPath[*vl*,p] est égale à 1 si le chemin *p* est constitutif du lien virtuel *vl* et égale à 0 sinon. On rappelle qu'un chemin *p* est constitutif de *vl* si ce chemin part du commutateur relié au terminal *vl.txsw* et aboutit à l'un des commutateurs de *vl.rxsw* ;
- vlBrSw[*vl,swDests,sw*] est égale à 1 si le chemin constitutif du lien virtuel *vl* se terminant par *swDest* passe par le commutateur *sw* et égale à 0 sinon ;
- vlBrPerSw[*vl,sw*] est égale au nombre de chemins constitutifs du lien virtuel *vl* passant par le commutateur *sw* ;
- comBrSw[*vl,sw*] est égale à 1 si plusieurs chemins constitutifs du lien virtuel *vl* passent par le commutateur *sw* ;
- vlSw[*vl,sw*] est égale à 1 si le lien virtuel *vl* passe par le commutateur *sw* et à 0 sinon ;
- fvlPerSw[*f,sw*] est égale au nombre de liens virtuels du faisceau fonctionnel *f* passant par le commutateur *sw* ;
- comfSw[*f,sw*] est égale à 1 si plusieurs liens virtuels du faisceau fonctionnel *f* passent par le commutateur *sw* et à 0 sinon ;
- fSw[*f,sw*] est égale à 1 si l'un des liens virtuels du faisceau fonctionnel *f* passe par le commutateur *sw* et à 0 sinon ;
- vlSwNb[*vl,sw$_1$,sw$_2$*] est égale au nombre de chemins constitutifs du lien virtuel *vl* passant successivement par les commutateurs *sw$_1$,sw$_2$* ;
- vlsw[*vl,sw$_1$,sw$_2$*] est égale à 1 s'il existe un chemin constitutif du lien virtuel *vl* passant successivement par les commutateurs *sw$_1$,sw$_2$* ;
- trfCst[*sw$_1$,sw$_2$*] est la somme de trfCstPast[*sw$_1$,sw$_2$*] et du coût de trafic entre les commutateurs *sw$_1$,sw$_2$* cumulé sur le sous-ensemble courant de liens virtuels à router ;
- fixvl[*sw$_1$,sw$_2$*] est égale à 1 s'il existe un lien virtuel déjà routé dudit sous-ensemble courant, passant successivement par les commutateurs *sw$_1$* et *sw$_2$*, et égale à 0 sinon ;
- sgSw[*sg,sw*] est égale à 1 si le commutateur *sw* est commun à tous les chemins constitutifs du sous-groupe *sg* et égale à 0 sinon.

La contrainte de base que l'on impose à une solution (ou lien virtuel candidat) est que le(s) chemin(s) constitutif(s) de la solution soi(en)t issu(s) du terminal source et aboutisse(nt) au(x) terminal(aux) destinataire(s), c'est-à-dire:

$$\forall f \in \mathbf{FF}; \quad \forall vl \in f.ocs; \quad \forall p \in \mathbf{PP}$$

$$\text{vlPath}[vl, p] \le c_{\mathbf{fs}}(p, vl.txsw) \quad \text{et} \quad \text{vlPath}[vl, p] \le \sum_{sw \in vl.rxsw} c_{\mathbf{ls}}(p, sw) \quad (2)$$

et que, pour chaque terminal destinataire du lien virtuel, il y ait un seul chemin constitutif issu du terminal source, soit :

$$\forall f \in \mathbf{FF}; \quad \forall vl \in f.ocs; \quad \forall sw \in vl.rxsw;$$

$$\sum_{p \in \mathbf{PP}} \text{vlPath}[vl, p].c_{\mathbf{ls}}(p, sw).c_{\mathbf{fs}}(p, vl.txsw) = 1 \quad (3)$$

La plupart des contraintes topologiques absolues sont susceptibles du même formalisme. Les contraintes restantes sont prises en compte, comme indiqué plus haut, en restreignant dès le départ l'ensemble **PP.**

Les contraintes topologiques relatives peuvent également s'exprimer à partir des variables de décision précitées sous la forme d'inégalités ou d'égalités linéaires. Ainsi, pour chaque ensemble Π de chemins constitutifs devant être ségrégués, c'est-à-dire ne pouvant partager aucun commutateur commun, la contrainte de ségrégation s'exprime par :

$$\forall sw \in \mathbf{SS} \; ; \quad \sum_{b \in \mathbf{\Pi}} \text{vlBrSw}[b.vl, b.swDest, sw] \le 1 \quad (4)$$

De manière similaire, pour un ensemble Π de chemins constitutifs devant subir une contrainte de collocation, c'est-à-dire devant passer par les mêmes commutateurs :

$$\forall sw \in \mathbf{SS} \quad ; \ \forall b_1, b_2 \in \mathbf{\Pi} \ ;$$

$$\mathrm{vlBrSw}\left[b_1.vl, b_1.swDest, sw\right] = \mathrm{vlBrSw}\left[b_2.vl, b_2.swDest, sw\right] \qquad (5)$$

Bien entendu, les contraintes doivent être vérifiées pour toutes les instances de ségrégation et de collocation à prendre en compte, à chaque instance étant associé un ensemble $\Pi$ déterminé.

Alternativement, si l'on utilise des contraintes de ségrégation relaxées, on posera pour tout groupe $g \in \mathbf{GG}$ de chemins constitutifs de liens virtuels, assujetti à une telle contrainte :

$$\forall sw \in \mathbf{SS} \ , \quad \sum_{\substack{sg \in g.sglist \\ sg.group=g}} sgSw[sg, sw] \leq g.sgErrmax \qquad (5')$$

dans laquelle la variable de décision $sgSw[sg,sw]$ est définie par les contraintes suivantes :

$$-(Q+1)+(Q+1).sgSw[sg,sw] \leq \sum_{b \in sg.pathlist} \mathrm{vlBrSw}\left[b.vl, b.swDest, sw\right] - Card\left(sg.pathlist\right)$$

et

$$\sum_{b \in sg.pathlist} \mathrm{vlBrSw}\left[b.vl, b.swDest, sw\right] - Card\left(sg.pathlist\right) + 1 \leq Q.sgSw[sg,sw]$$

$$(5'')$$

$$Q = \underset{sg \in \mathbf{SG}}{Max} \left(Card\left(sg.pathlist\right)\right) .$$
avec

Les expressions (5") impliquent en effet :

$$\sum_{b \in sg.pathlist} \mathrm{vlBrSw}\left[b.vl, b.swDest, sw\right] \geq Card\left(sg.pathlist\right)$$

$sgSw[sg,sw]=1$ si $\qquad$ et
$sgSw[sg,sw]=0$ sinon .

Les fonctions de coût s'expriment aussi à partir des variables de décision précitées.

Par exemple, la première fonction de coût $CF_1$ visant à minimiser indépendamment le nombre de commutateurs traversés par les chemins constitutifs d'un lien virtuel peut s'exprimer par :

$$CF_1 = \sum_{f \in \mathbf{FF}} \sum_{vl \in f.ocs} \sum_{p \in \mathbf{PP}} \mathrm{vlPath}[vl, p].card(p) \qquad (6)$$

où $card(p)$ est la cardinalité de la liste ordonnée $p$, autrement dit le nombre de commutateurs traversés par le chemin $p$.

On peut montrer mathématiquement que la seconde fonction de coût, visant à minimiser le nombre de commutateurs communs aux différents chemins de chaque lien virtuel de type multipoint peut s'exprimer par :

$$CF_2 = \sum_{\substack{f \in \mathbf{FF} \\ f.profile=1}} \sum_{vl \in f.ocs} \sum_{sw \in \mathbf{SS}} \mathrm{comBrSw}[vl, sw] \qquad (7)$$

De manière similaire, la troisième fonction de coût, visant à minimiser le nombre de commutateurs communs aux liens virtuels d'un même faisceau fonctionnel peut s'écrire :

$$CF_3 = \sum_{\substack{f \in \mathbf{FF} \\ f.profile=0 \\ sw \in \mathbf{SS}}} \mathrm{comfSw}\left[f, sw\right] \qquad (8)$$

On peut également montrer que la quatrième fonction de coût, visant à minimiser le nombre de commutateurs traversés par les liens d'un faisceau fonctionnel peut s'exprimer simplement par :

$$CF_4 = \sum_{\substack{f \in \mathbf{FF} \\ f.profile=0 \\ sw \in \mathbf{SS}}} \mathrm{fSw}\left[f, sw\right] \qquad (9)$$

La cinquième fonction de coût vise à router les liens virtuels de manière à passer par les commutateurs les moins chargés. Il est possible de déterminer à partir du fichier d'état du réseau et des liens à router le coût de trafic entre deux commutateurs adjacents. On appelle ici commutateurs adjacents des commutateurs $sw_1, sw_2$ reliés par une liaison physique directe. Plus précisément, on détermine tout d'abord pour chaque couple quelconque de commutateurs adjacents $sw_1, sw_2$, s'il existe au moins un lien virtuel passant successivement par ceux-ci :

$$\forall f \in \mathbf{FF}; \quad \forall vl \in f.ocs; \quad \forall sw_1, sw_2 \in \mathbf{SS};$$

$$\mathrm{vlSwNb}\left[vl, sw_1, sw_2\right] = \sum_{p \in \mathbf{PP}} \mathrm{vlPath}\left[vl, p\right].c_{\mathbf{pss}}\left(p, sw_1, sw_2\right) \qquad (10)$$

La variable de décision vlSw[$vl, sw_1, sw_2$] est exprimée en fonction de vlSwNb[$vl, sw_1, sw_2$] au moyen des contraintes linéaires suivantes:

$$\forall f \in \mathbf{FF}; \quad \forall vl \in f.ocs; \quad \forall sw_1, sw_2 \in \mathbf{SS};$$

$$\mathrm{vlSw}\left[vl, sw_1, sw_2\right] \leq \mathrm{vlSwNb}\left[vl, sw_1, sw_2\right]$$

$$\mathrm{vlSwNb}\left[vl, sw_1, sw_2\right] \leq (P+1)\mathrm{vlSw}\left[vl, sw_1, sw_2\right] \qquad (11)$$

Ce jeu de contraintes linéaires implique en effet :

$$\mathrm{vlSw}\left[vl, sw_1, sw_2\right] = 0 \quad \mathtt{si} \quad \mathrm{vlSwNb}\left[vl, sw_1, sw_2\right] = 0$$

$$\mathrm{vlSw}\left[vl, sw_1, sw_2\right] = 1 \quad \mathtt{si} \quad \mathrm{vlSwNb}\left[vl, sw_1, sw_2\right] \geq 1 \qquad (12)$$

De même on exprime la variable de décision fixvl[$sw_1, sw_2$] en fonction de la somme

$$\sum_{\substack{f \in \mathbf{FF} \\ vl \in f.ocs \\ vl.rted=0}} \mathrm{vlSw}\left[vl, sw_1, sw_2\right]$$

au moyen des contraintes linéaires suivantes :

$$\forall f \in \mathbf{FF}; \quad \forall vl \in f.ocs; \quad \forall sw_1, sw_2 \in \mathbf{SS};$$

$$\mathrm{fixvl}\left[sw_1, sw_2\right] \leq \sum_{\substack{f \in \mathbf{FF} \\ vl \in f.ocs \\ vl.rted=0}} \mathrm{vlSw}\left[vl, sw_1, sw_2\right]$$

$$\sum_{\substack{f \in \mathbf{FF} \\ vl \in f.ocs \\ vl.rted=0}} \mathrm{vlSw}\left[vl, sw_1, sw_2\right] \leq (M+1)\mathrm{fixvl}\left[sw_1, sw_2\right]$$

$$(13)$$

avec $M = F.\max_{f \in \mathbf{FF}}\left(Card\left(f.ocs\right)\right)$ où $F=Card(\mathbf{FF})$

Ce jeu de contraintes linéaires implique en effet:

$$\mathrm{fixvl}\left[sw_1, sw_2\right] = 0 \quad \mathtt{si} \quad \sum_{\substack{f \in \mathbf{FF} \\ vl \in f.ocs \\ vl.rted=0}} \mathrm{vlSw}\left[vl, sw_1, sw_2\right] = 0$$

$$\mathrm{fixvl}\left[sw_1, sw_2\right] = 1 \quad \mathtt{si} \quad \sum_{\substack{f \in \mathbf{FF} \\ vl \in f.ocs \\ vl.rted=0}} \mathrm{vlSw}\left[vl, sw_1, sw_2\right] \geq 1$$

$$(14)$$

On évalue ensuite le coût de trafic du port de sortie de $sw_1$ connecté à $sw_2$, pour un couple quelconque de commutateurs adjacents :

$$\forall sw_1, sw_2 \in \mathbf{SS};$$

$$\mathrm{trfCst}\left[sw_1, sw_2\right] = \mathrm{trfCstPast}\left[sw_1, sw_2\right] + \sum_{\substack{f \in \mathbf{FF} \\ vl \in f.ocs \\ vl.rted=0}} (vl.cost).\mathrm{vlSw}\left(vl, sw_1, sw_2\right)$$

$$(15)$$

où trfCstPast[$sw_1, sw_2$] est le coût de trafic entre les commutateurs $sw_1, sw_2$ c'est-à-dire sur le port de sortie de $sw_1$ relié à $sw_2$, cumulé sur tous les liens virtuels déjà routés.

Autrement dit, le calcul de coût de trafic est effectué sur les liens déjà routés ($vl.rted$=1) et sur les liens à router ($vl.rted$=0). La valeur trfCstPast[$sw_1, sw_2$] est initialisée par celle du coût de trafic induit par les liens virtuels fixés, c'est-à-dire dont le routage est univoque. Elle peut être stockée dans le fichier d'état du réseau.

La cinquième fonction de coût s'exprime alors sous la forme suivante :

$$CF_5 = \max_{sw_1, sw_2 \in \mathbf{SS}}\left(\mathrm{trfCstw}\left[sw_1, sw_2\right]\right) \qquad (16)$$

en imposant les contraintes linéaires :

$$\forall sw_1, sw_2 \in \mathbf{SS};$$

$$\mathrm{trfCstw}[sw_1,sw_2] - \mathrm{trfCst}[sw_1,sw_2] \geq M\left(\mathrm{fixvl}[sw_1,sw_2] - 1\right)$$

$$\mathrm{trfCstw}[sw_1,sw_2] \leq \mathrm{trfCst}[sw_1,sw_2]$$

$$\mathrm{trfCstw}[sw_1,sw_2] \leq M\mathrm{fixvl}[sw_1,sw_2]$$

$$\mathrm{trfCst}[sw_1,sw_2] < M \qquad\qquad (17)$$

$$M = F.\max_{f \in \mathbf{FF}}\left(Card\left(f.ocs\right)\right).\max_{\substack{f \in FF \\ vl \in f.ocs}}\left(vl.cost\right)$$

avec

Ce jeu de contraintes linéaires implique en effet pour tout couple de commutateurs $sw_1, sw_2$:

$$\mathrm{trfCstw}[sw_1,sw_2] = \mathrm{trfCst}[sw_1,sw_2] \qquad \mathtt{si} \quad \mathrm{fixvl}[sw_1,sw_2] = 1$$

$$\mathrm{trfCstw}[sw_1,sw_2] = 0 \qquad\qquad\qquad \mathtt{si} \quad \mathrm{fixvl}[sw_1,sw_2] = 0$$

$$(18)$$

Ceci permet de ne considérer dans la variable de décision trfCstw[$sw_1,sw_2$] que la contribution des liens virtuels à router et, parmi ces derniers, seulement ceux qui passent par $sw_1,sw_2$.

Si l'on souhaite effectuer une minimisation conjointe des fonctions de coût, on construit une nouvelle fonction

$$CF = \sum_i \alpha_i CF_i \ ,$$

combinaison linéaire des fonctions $CF_i$ avec les coefficients de pondération $0 \leq \alpha_i \leq 1$. C'est en définitive la recherche du minimum de la fonction de coût $CF$ qui donne la solution optimale de routage sous forme de valeurs des variables de décision. Si plusieurs solutions optimales existent au sens précédent, l'une d'entre elles est choisie de manière arbitraire.

Alternativement, les fonctions de coût peuvent être minimisées l'une après l'autre, par ordre de priorité décroissante, chacune l'étant sur le sous-ensemble de solutions fournies par l'étape de minimisation précédente. Dans ce mode de réalisation, des contraintes peuvent être prises en compte entre les étapes de minimisation.

Que ce soit par minimisation conjointe ou successive des fonctions de coût, l'optimisation globale sur l'ensemble **FF** peut entraîner des temps de calcul très longs si le nombre de liens virtuels est élevé.

On partitionne alors avantageusement cet ensemble en sous-ensembles indépendants de plus faible cardinalité possible, les contraintes topologiques relatives et la minimisation des fonctions de coût s'appliquant seulement au sein de chaque sous-ensemble. Etant donné que les liens virtuels d'un même faisceau fonctionnel ne peuvent être routés indépendamment, chaque sous-ensemble est nécessairement constitué d'un ou de plusieurs faisceaux. L'algorithme de routage est appliqué en séquence auxdits sous-ensembles.

Il convient de noter toutefois que l'indépendance des sous-ensembles peut ne pas être totale. Ainsi, la minimisation de fonction de coût $CF_5$ fait en principe intervenir tous les liens virtuels à router. Dans ce cas, on privilégie les sous-ensembles de liens virtuels pour lesquels la liberté de routage est la plus faible, par exemple ceux dont les liens seront *a priori* les plus courts, ces sous-ensembles étant traités en priorité par le procédé de routage.

Des exemples de routage selon l'invention seront donnés ci-après pour un réseau embarqué. Dans ces exemples, les fonctions de coût sont minimisées successivement. L'unité de routage considérée est ici le faisceau fonctionnel, un lien virtuel étant considéré comme un faisceau à un seul lien.

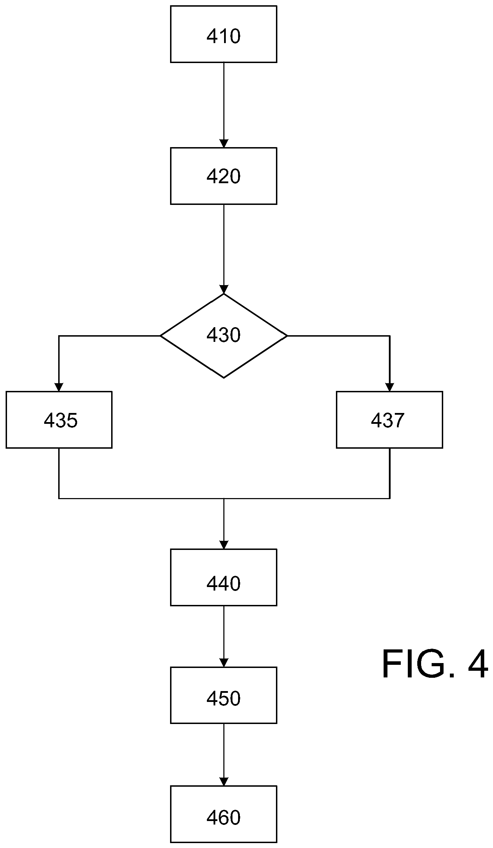

La Fig. 4 illustre schématiquement un exemple de routage de lien virtuel (ou faisceau monolien) de type point à point, entre un terminal source $E_1$ et un terminal destinataire $R_1$.

A l'étape 410, on applique la contrainte de base pour déterminer les chemins possibles entre le terminal source et le terminal destinataire.

A l'étape 420, on applique les contraintes topologiques relatives, en tenant compte des liens virtuels déjà routés, s'il en existe, puis on détermine en 430 si les terminaux sont du même côté du réseau. Si c'est le cas, on applique en 435 une contrainte de non franchissement (routage intra-zone) et on minimise la fonction de coût $CF_1$ sur l'ensemble des solutions possibles sélectionnées par les contraintes précédentes. En revanche, si les terminaux ne sont pas du même côté du réseau, on applique en 437 une contrainte de franchissement (un seul franchissement inter-zone) et l'on minimise, comme pour le premier cas, la fonction de coût $CF_1$ sur l'ensemble des solutions possibles.

Si les étapes 435 ou 437 ne fournissent pas une solution de routage unique, on poursuit en minimisant en 440 la fonction de coût $CF_5$ sur les solutions restantes. On met à jour le fichier d'état du réseau en 450.

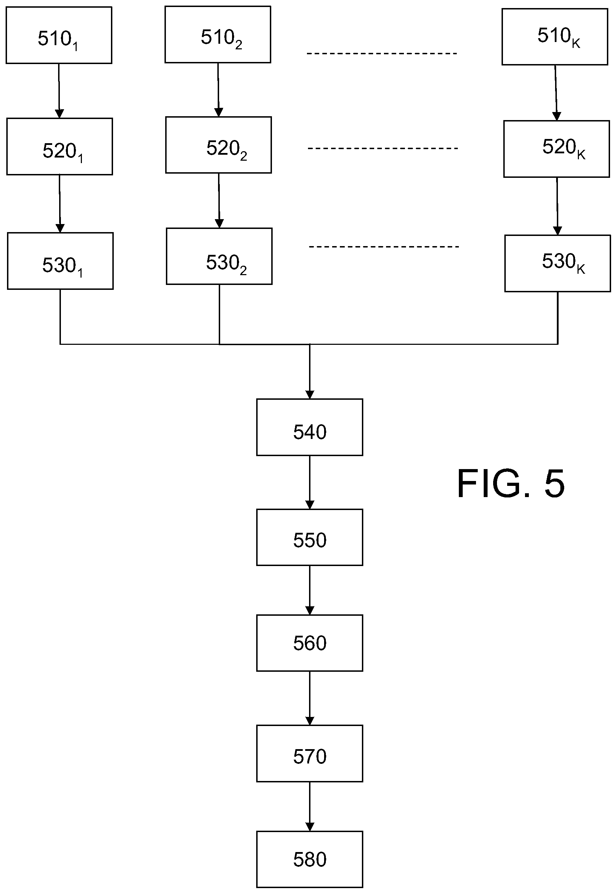

La Fig. 5 illustre schématiquement un exemple de routage de lien virtuel (ou faisceau monolien) de type multipoint, entre un terminal source $E_1$ et une pluralité K de terminaux destinataires $R_1, R_2, .., R_K$.

Pour chaque couple de terminaux $(E_1, R_k)$ on applique en $510_1, 510_2, .., 510_K$ la contrainte de base de manière à ne retenir que les chemins possibles entre $E_1$ d'une part et $R_1, R_2, .., R_K$ d'autre part.

En $520_1, 520_2, .., 520_K$, on applique individuellement aux différents chemins, les contraintes topologiques relatives en tenant compte des liens déjà routés.

Sur chacun des K ensembles de chemins possibles on minimise individuellement la fonction de coût $CF_1$, en $530_1, 530_2, .., 530_K$, respectivement.

On effectue ensuite en 540 toutes les combinaisons des chemins donnés par $530_1, 530_2, .., 530_K$, respectivement. On obtient ainsi un ensemble de solutions de routage possibles pour le lien virtuel en question.

On minimise alors en 550 la fonction de coût $CF_2$ sur l'ensemble de ces solutions possibles.

Si l'étape 550 ne fournit pas une solution unique, on minimise en 560 la fonction de coût $CF_4$ sur l'ensemble des solutions restantes.

Si l'étape 560 ne fournit toujours pas de solution unique, la fonction de coût $CF_5$ est minimisée en 570 sur l'ensemble des solutions restantes et l'on met à jour le fichier d'état du réseau en 580.

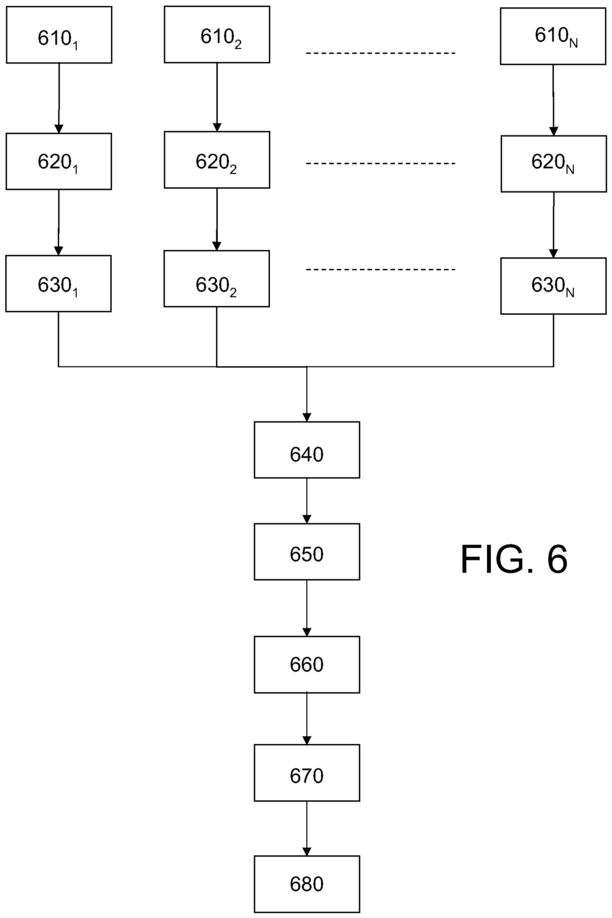

La Fig. 6 illustre schématiquement un exemple de routage de faisceau de N liens virtuels de type point à point. Chaque lien est issu d'un terminal source $E_i$ et dessert un terminal destinataire $R_i$, $1 < i \leq N$.

Pour chaque couple de terminaux $(E_i, R_i)$ on applique en $610_i$ la contrainte de base de manière à ne retenir que les chemins possibles entre $E_i$ et $R_i$.

Les étapes $620_i$, $630_i$, 640 sont analogues aux étapes $520_k$, $530_k$, 540 à ceci près que l'on obtient en 640 toutes les solutions possibles de routage pour le faisceau de liens.

On minimise ensuite en 650 la fonction de coût $CF_3$ sur l'ensemble des solutions possibles.

Si l'étape 650 ne fournit pas une solution unique, on minimise en 660 la fonction de coût $CF_4$ sur l'ensemble des solutions restantes.

Si l'étape 660 ne fournit toujours pas de solution unique, la fonction de coût $CF_5$ est minimisée en 670 sur l'ensemble des solutions restantes et on met à jour le fichier d'état du réseau en 680.

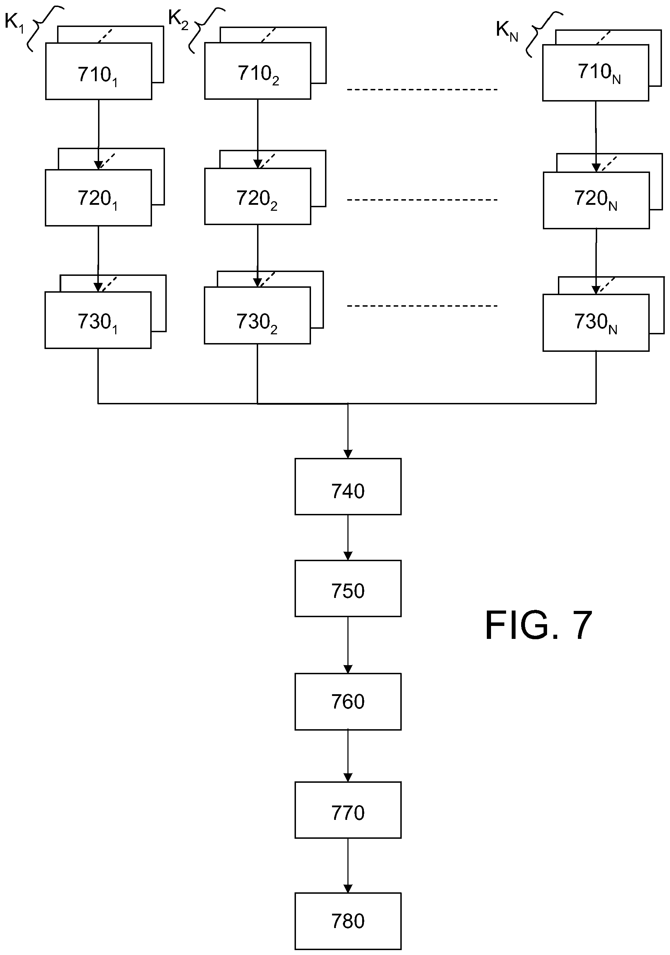

La Fig. 7 illustre schématiquement un exemple de routage de faisceau de N liens virtuels de type multipoint. On suppose que chaque lien virtuel $VL_i$ est issu d'un terminal source $E_i$ et dessert $K_i$ terminaux destinataires $R_{ik}$ avec $1 < i \leq N$ et $1 < k \leq K_i$.

On applique en $710_i$ la contrainte de base pour tous les couples de terminaux $(E_i, R_{ik})$, $1 < k \leq K_i$ puis en $720_i$ les contraintes topologiques relatives comme en Fig. 5.

On obtient en sortie de $720_i$ $K_i$ ensembles $P_{ik}$ de chemins possibles pour constituer le lien virtuel $VL_i$, un ensemble $P_{ik}$ étant relatif à un couple $(E_i, R_{ik})$ donné.

A l'étape $730_i$, on minimise la fonction de coût $CF_1$ sur chacun de ces ensembles, comme aux étapes $530_1$ à $530_K$ de la Fig. 5.

A l'étape 740, on effectue toutes les combinaisons possibles de tous les chemins retenus à l'étape $730_i$ étant entendu que, pour chaque combinaison, l'on ne sélectionne qu'un chemin par couple $(E_i, R_{ik})$. Chaque combinaison correspond ainsi à $K_1 + K_2 + ... + K_N$ chemins retenus. On obtient ainsi un ensemble de solutions de routage possibles pour les différents liens virtuels $VL_i$, c'est-à-dire un ensemble de solutions de routage possibles du faisceau.

Le reste de l'organigramme est identique à celui de la Fig. 6, les étapes 750, 760, 770 et 780 étant respectivement identiques à celles représentées en 650, 660, 670 et 680.

Annexe

Les contraintes de ségrégation relaxées portent généralement sur un groupe de chemins constitutifs de liens virtuels à router simultanément.

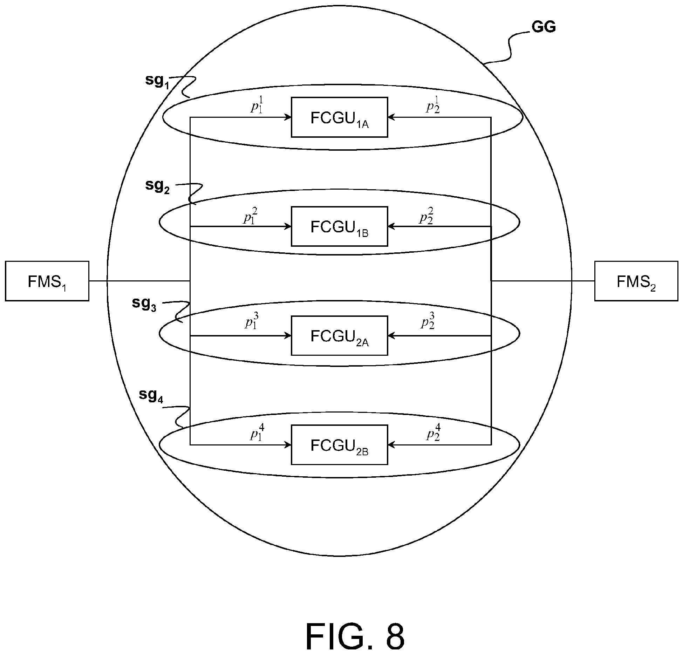

On a représenté symboliquement en Fig. 8 un tel groupe de chemins.

On supposera que trois liens virtuels $VL_1, VL_2, VL_3$ sont à router simultanément et que leurs chemins constitutifs sont :

$$VL_1 = \left\{ p_1^1, p_1^2, p_1^3, p_1^4 \right\} \;;$$

$$VL_2 = \left\{ p_2^1, p_2^2, p_2^3 \right\} \;;$$

$$VL_3 = \left\{ p_3^1, p_3^2 \right\} \;;$$

Dans l'exemple illustré, le groupe **GG** de chemins soumis à la contrainte de ségrégation relaxée est partitionné en $N_{sg}$=4 sous groupes

$$\mathbf{sg_1} = \left\{ p_1^1, p_2^1 \right\}, \; \mathbf{sg_2} = \left\{ p_1^2, p_2^2 \right\}, \; \mathbf{sg_3} = \left\{ p_2^2; p_1^3 \right\}, \; \mathbf{sg_4} = \left\{ p_3^1 \right\}.$$

La contrainte de ségrégation relaxée s'exprime par un nombre maximal $n_{sg}$<$N_{sg}$ de sous-groupes pouvant être invalidés par la défaillance d'un même commutateur (par exemple, la défaillance d'un commutateur affectera les chemins $p_1^1$, $p_2^1$ de **sg₁**). Autrement dit, au moins $N_{sg}$-$n_{sg}$ sous-groupes doivent chacun contenir au moins un chemin non corrompu par la défaillance d'un commutateur.

Un exemple d'application de contrainte de ségrégation relaxée est donné ci-après. On considère le routage de liens virtuels entre les systèmes de gestion de vol dénommés FMS (*Flight Management System*) et les calculateurs de commande de vol dénommés FCGU (*Flight Control and Guidance Unit*). Les premiers sont classiquement chargés d'assister le pilote dans les opérations de navigation et de gestion du vol. Les seconds calculent les ordres de guidage et d'asservissement des commandes de vol.

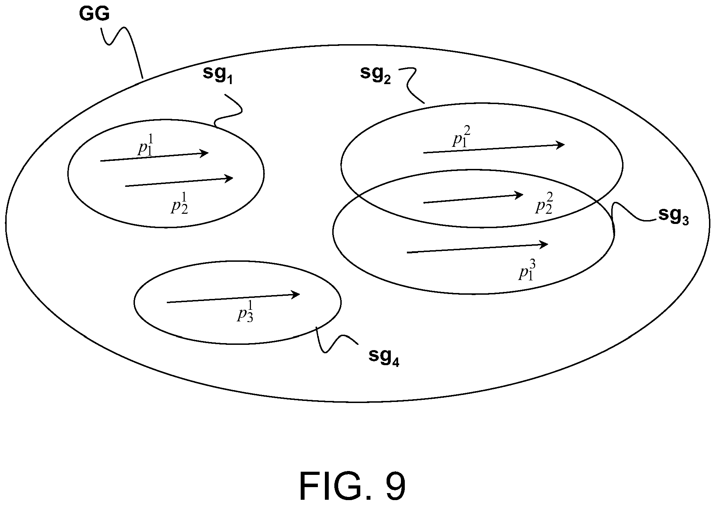

Nous supposerons que l'aéronef comprend deux systèmes FMS et quatre calculateurs FCGU, chaque système FMS étant à l'origine d'un lien virtuel (multi-point) à destination des quatre calculateurs FCGU, comme illustré en Fig. 9. L'architecture représentée est de type « cross-check » : chaque calculateur FCGU reçoit des paramètres de vol des deux systèmes FMS et en effectue une comparaison. Si les paramètres reçus par un même calculateur diffèrent, le calculateur signale une erreur et n'effectue pas de traitement sur le paramètre. Les exigences de sûreté imposent qu'une erreur sur un paramètre ne reste pas indétectée par plus d'un calculateur. On note $a$ le paramètre transmis par les systèmes FMS voire une trame de tels paramètres, supposé(s) correct(s) et $a$* un paramètre erroné reçu par un calculateur FCGU voire une trame erronée de paramètres, l'erreur étant due à la défaillance d'un commutateur.

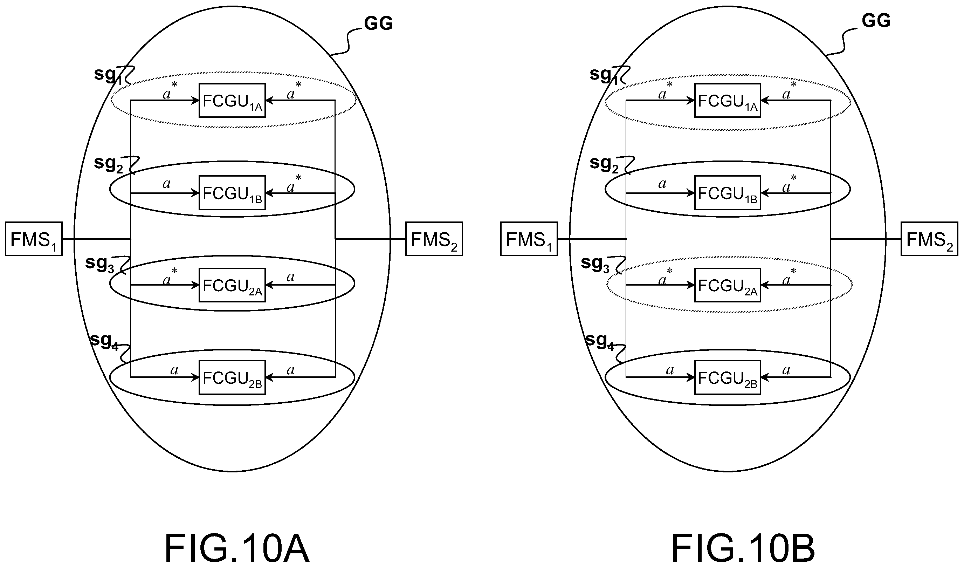

Comme illustré en Figs. 10A et 10B, un calculateur peut ne pas détecter d'erreur en cas de corruption bilatérale (cas de FCGU$_{1A}$ en Fig. 10A et de FCGU$_{1A}$ et FCGU$_{2A}$ en Fig. 10B), lorsque les deux paramètres erronés/trames erronées sont identiques. Cette situation ne doit pas se produire pour plus d'un calculateur. Ainsi, la situation illustrée en Fig. 10A (une seule erreur non détectée) est acceptable alors que celle en Fig. 10B (deux erreurs non détectées) ne l'est pas.

On considère le groupe **GG** constitué des chemins constitutifs des deux liens virtuels à router :

$$VL_1 = \left\{ p_1^1, p_1^2, p_1^3, p_1^4 \right\}$$

$$VL_2 = \left\{ p_2^1, p_2^2, p_2^3, p_2^4 \right\}$$

et l'on partitionne le groupe **GG** en autant de sous-groupes que de calculateurs FCGU, soit **sg₁,sg₂,sg₃,sg₄,** chaque sous-groupe contenant les deux chemins issus des systèmes FMS à destination du calculateur considéré. On impose alors que la défaillance d'un commutateur invalide au plus un sous-groupe ($n_{sg}$=1) parmi les 4 ($N_{sg}$=4). Cette contrainte de ségrégation relaxée permet de s'assurer qu'au plus un calculateur FCGU manque de diagnostiquer une erreur suite à la défaillance d'un commutateur du réseau.

**Revendications**

1. Procédé de routage de liens virtuels dans un réseau à commutation de trames comprenant une pluralité de terminaux sources et/ou destinataires desdites trames, des commutateurs de trames étant reliés entre eux par des liaisons physiques, chaque lien virtuel étant défini, pour un type point à point, par un chemin à travers ledit réseau entre un terminal source et un terminal destinataire et, pour un type multipoint, par une pluralité de chemins à travers ledit réseau entre un terminal source d'une part et une pluralité de terminaux destinataires, d'autre part, ledit procédé étant **caractérisé en ce que**, pour au moins un lien virtuel, il comprend les étapes suivantes :

   a) sélection (250) parmi un ensemble de chemins possibles entre le terminal source et le terminal ou les terminaux destinataires, d'un sous-ensemble de chemins satisfaisant à au moins une contrainte topologique prédéterminée, ladite contrainte topologique appartenant à un ensemble de contraintes topologiques absolues et de contraintes topologiques relatives, les contraintes topologiques absolues pesant sur le routage d'un lien virtuel indépendamment de la présence d'autres liens virtuels sur le réseau et les contraintes topologiques relatives concernant les liens virtuels entre eux ;
   b) détermination (260) parmi ledit sous-ensemble, d'un chemin, pour un lien virtuel de type point à point ou d'une pluralité de chemins, pour un lien virtuel de type multipoint, minimisant au moins une fonction de coût donnée ;
   c) routage (295) dudit lien virtuel selon le chemin ou les chemins ainsi déterminés.

2. Procédé de routage selon la revendication 1, **caractérisé en ce que**, ledit lien virtuel étant un lien point à point et le réseau étant partitionné en zones distinctes, ladite contrainte topologique est une contrainte (435) de non franchissement de frontière entre zones si les commutateurs reliés respectivement au terminal source et au terminal destinataire appartiennent à la même zone, ladite contrainte topologique appliquée étant, dans le cas contraire, une contrainte (437) de franchissement unique de la frontière entre les zones d'appartenance respectives desdits terminaux source et destinataire.

3. Procédé de routage selon la revendication 1 ou 2, **caractérisé en ce que** l'étape de sélection prend en compte des contraintes topologiques additionnelles (420) de ségrégation et/ou de collocation des chemins possibles vis-à-vis de liens virtuels déjà routés ou à router simultanément avec ledit lien ou de commutateurs dudit réseau.

4. Procédé de routage selon la revendication 1 ou 2, **caractérisé en ce que** l'étape de sélection prend en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

5. Procédé de routage selon la revendication 2, 3 ou 4, **caractérisé en ce que** ladite fonction de coût (440) est le nombre de commutateurs traversés par un chemin.

6. Procédé de routage selon la revendication 1, **caractérisé en ce que** ledit lien virtuel étant de type multipoint et le réseau étant partitionné en zones distinctes, on applique à chaque chemin possible entre ledit terminal source et un terminal destinataire dudit lien, une contrainte ($520_1$,..,$520_K$) de non franchissement de frontière entre zones si les commutateurs reliés respectivement au terminal source et audit terminal destinataire appartiennent à la même zone, ladite contrainte topologique appliquée étant, dans le cas contraire, une contrainte de franchissement unique de la frontière entre les zones d'appartenance respectives desdits terminaux source et destinataire.

7. Procédé de routage selon la revendication 6, **caractérisé en ce que** l'on applique ($520_1$,..,$520_K$), pour chacun des chemins possibles entre ledit terminal source et un terminal destinataire dudit lien, des contraintes topologiques additionnelles de ségrégation et/ou de collocation de ces chemins vis-à-vis de liens virtuels déjà routés ou à router simultanément avec ledit lien ou de commutateurs dudit réseau.

8. Procédé de routage selon la revendication 6, **caractérisé en ce que** l'étape de sélection prend en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidé si tous les chemins qui lui appartiennent sont affectés par la défaillance d'un même commutateur dudit réseau.

**9.** Procédé de routage selon la revendication 6, 7 ou 8, **caractérisé en ce que** ladite fonction de coût est le nombre de commutateurs traversés par un chemin et qu'elle est minimisée ($530_1$,..,$530_K$) sur chaque ensemble de chemins possibles entre ledit terminal source et un terminal destinataire dudit lien, pour fournir au moins un chemin candidat par terminal destinataire.

**10.** Procédé de routage selon la revendication 9, **caractérisé en ce que** l'on effectue (540) des combinaisons de K chemins candidats où K est le nombre de terminaux destinataires du lien, chaque combinaison correspondant à une solution possible de routage dudit lien multipoint, et qu'un seconde fonction de coût est minimisée (550) sur l'ensemble desdites solutions possibles ainsi obtenues.

**11.** Procédé de routage selon la revendication 10, **caractérisé en ce que** la seconde fonction de coût évalue, pour chaque solution possible, le nombre de commutateurs partagés entre ses différents chemins constitutifs.

**12.** Procédé de routage selon la revendication 1, **caractérisé en ce que**, pour au moins un groupe de liens participant à la réalisation d'une même fonction, dit faisceau de liens, chaque lien étant point à point et le réseau étant partitionné en zones distinctes, on applique pour chacun des liens dudit faisceau ($620_1$,..,$620_N$), à chaque chemin possible entre le terminal source et le terminal destinataire dudit lien, une contrainte de non franchissement de frontière entre zones si les commutateurs reliés respectivement au terminal source et au terminal destinataire appartiennent à la même zone, et, dans le cas contraire, une contrainte de franchissement unique de la frontière entre les zones d'appartenance respectives desdits terminaux source et destinataire.

**13.** Procédé de routage selon la revendication 12, **caractérisé en ce que** l'on applique ($620_1$,..,$620_K$), pour chaque lien virtuel et pour chacun des chemins possibles entre le terminal source et le terminal destinataire dudit lien, des contraintes topologiques additionnelles de ségrégation et/ou de collocation de ces chemins vis-à-vis de liens virtuels déjà routés ou à router simultanément avec ledit lien ou de commutateurs dudit réseau.

**14.** Procédé de routage selon la revendication 12, **caractérisé en ce que** l'étape de sélection prend en compte des contraintes topologiques additionnelles, chaque contrainte topologique additionnelle portant sur un groupe de chemins constitutifs d'un ensemble de liens virtuels à router simultanément, ledit groupe étant constitué d'une pluralité $N_{sg}$ de sous-groupes desdits chemins, ladite contrainte additionnelle exprimant qu'au maximum un nombre $n_{sg}$ de sous-groupes tel que $0 \leq n_{sg} < N_{sg}$ peuvent être invalidés, un sous-groupe étant invalidés si tous les chemins qui lui appartiennent sont affectés par la défaillance d'un même commutateur dudit réseau.

**15.** Procédé de routage selon la revendication 12, 13 ou 14, **caractérisé en ce que** ladite fonction de coût est le nombre de commutateurs traversés par un chemin et qu'elle est minimisée ($630_1$,..,$630_N$), pour chacun des liens dudit faisceau, sur chaque ensemble de chemins possibles entre le terminal source et le terminal destinataire dudit lien, pour fournir au moins un chemin candidat par lien.

**16.** Procédé de routage selon la revendication 15, **caractérisé en ce que** l'on effectue (640) des combinaisons de N chemins candidats où N est le nombre de liens dudit faisceau, chaque combinaison correspondant à une solution possible de routage dudit faisceau, et qu'une troisième fonction de coût est minimisée (650) sur l'ensemble desdites solutions possibles ainsi obtenues.

**17.** Procédé de routage selon la revendication 16, **caractérisé en ce que** la troisième fonction de coût évalue, pour chaque solution possible de routage du faisceau, le nombre de commutateurs partagés entre les chemins dont ladite solution est la combinaison.

**18.** Procédé de routage selon la revendication 1, **caractérisé en ce que**, pour au moins un groupe de liens participant à la réalisation d'une même fonction, dit faisceau de liens, chaque lien étant de type multipoint et le réseau étant partitionné en zones distinctes, on applique pour chacun des liens dudit faisceau ($720_1$,..,$720_N$) à chaque chemin possible entre le terminal source et un terminal destinataire dudit lien, une contrainte de non franchissement de frontière entre zones si les commutateurs reliés respectivement au terminal source et au terminal destinataire appartiennent à la même zone, et, dans le cas contraire, une contrainte de franchissement unique de la frontière entre les zones d'appartenance respectives desdits terminaux source et destinataire.

**19.** Programme d'ordinateur comprenant des moyens logiciels adaptés à mettre en oeuvre les étapes du procédé selon l'une des revendications précédentes, lorsqu'il est exécuté par un ordinateur.

**Patentansprüche**

1. Verfahren zum Routen virtueller Links in einem Frame-Switching-Netz, das eine Vielzahl von Ausgangs- und/oder Empfangsendgeräten der Frames enthält, wobei Frame-Schalter durch physische Verbindungen miteinander verbunden sind, wobei jeder virtuelle Link für einen Punkt-zu-Punkt-Typ durch einen Pfad über das Netz zwischen einem Ausgangsendgerät und einem Empfangsendgerät und für einen Mehrpunkt-Typ durch eine Vielzahl von Pfaden über das Netz zwischen einem Ausgangsendgerät einerseits und einer Vielzahl von Empfangsendgeräten andererseits definiert wird, wobei das Verfahren **dadurch gekennzeichnet ist, dass** es für mindestens einen virtuellen Link die folgenden Schritte enthält:

   a) Auswahl (250), aus einer Einheit von möglichen Pfaden zwischen dem Ausgangsendgerät und dem oder den Empfangsendgerät(en), einer Teileinheit von Pfaden, die zumindest eine vorbestimmte topologische Bedingung erfüllen, wobei die topologische Bedingung zu einer Einheit von absoluten topologischen Bedingungen und relativen topologischen Bedingungen gehört, wobei die absoluten topologischen Bedingungen das Routen eines virtuellen Links unabhängig vom Vorhandensein anderer virtueller Links im Netz beeinflussen und die relativen topologischen Bedingungen die virtuellen Links untereinander betreffen;
   b) Bestimmung (260), in der Teileinheit, eines Pfads für einen virtuellen Link des Typs Punkt-zu-Punkt oder einer Vielzahl von Pfaden für einen virtuellen Link vom Mehrpunkt-Typ, wodurch mindestens eine gegebene Kostenfunktion minimiert wird;
   c) Routen (295) des virtuellen Links gemäß dem so bestimmten Pfad oder den so bestimmten Pfaden.

2. Routing-Verfahren nach Anspruch 1, **dadurch gekennzeichnet, dass**, wenn der virtuelle Link ein Punkt-zu-Punkt-Link und das Netz in unterschiedliche Zonen partitioniert ist, die topologische Bedingung eine Bedingung (435) des Nichtüberschreitens einer Grenze zwischen Zonen ist, wenn die mit dem Ausgangsendgerät bzw. mit dem Empfangsendgerät verbundenen Schalter zur gleichen Zone gehören, wobei die angewendete topologische Bedingung im gegenteiligen Fall eine Bedingung (437) eines einmaligen Überschreitens der Grenze zwischen den Zugehörigkeitszonen des Ausgangsendgeräts bzw. des Empfangsendgeräts ist.

3. Routing-Verfahren nach Anspruch 1 oder 2, **dadurch gekennzeichnet, dass** der Auswahlschritt zusätzliche topologische Bedingungen (420) der Segregation und/oder der Kollokation der möglichen Pfade gegenüber bereits gerouteten oder gleichzeitig mit dem Link zu routenden virtuellen Links oder Schaltern des Netzes berücksichtigt.

4. Routing-Verfahren nach Anspruch 1 oder 2, **dadurch gekennzeichnet, dass** der Auswahlschritt zusätzliche topologische Bedingungen berücksichtigt, wobei jede zusätzliche topologische Bedingung sich auf eine Gruppe von Pfaden bezieht, die konstituierender Bestandteil einer Einheit von gleichzeitig zu routenden virtuellen Links sind, wobei die Gruppe aus einer Vielzahl $N_{sg}$ von Teilgruppen der Pfade besteht, wobei die zusätzliche Bedingung ausdrückt, dass maximal eine Anzahl $n_{sg}$ von Teilgruppen derart, dass gilt $0 \le n_{sg} < N_{sg}$, ungültig gemacht werden können, wobei eine Teilgruppe ungültig gemacht wird, wenn alle Pfade, die zu ihr gehören, vom Ausfall des gleichen Schalters des Netzes betroffen sind.

5. Routing-Verfahren nach Anspruch 2, 3 oder 4, **dadurch gekennzeichnet, dass** die Kostenfunktion (440) die Anzahl von von einem Pfad durchquerten Schaltern ist.

6. Routing-Verfahren nach Anspruch 1, **dadurch gekennzeichnet, dass**, wenn der virtuelle Link vom Mehrpunkt-Typ und das Netz in unterschiedliche Zonen partitioniert ist, an jeden möglichen Pfad zwischen dem Ausgangsendgerät und einem Empfangsendgerät des Links eine Bedingung ($520_1$, ..., $520_K$) des Nichtüberschreitens einer Grenze zwischen Zonen angewendet wird, wenn die mit dem Ausgangsendgerät bzw. Empfangsendgerät verbundenen Schalter zur gleichen Zone gehören, wobei die angewendete topologische Bedingung im gegenteiligen Fall eine Bedingung des einmaligen Überschreitens der Grenze zwischen den Zugehörigkeitszonen des Ausgangsendgeräts bzw. Empfangsendgeräts ist.

7. Routing-Verfahren nach Anspruch 6, **dadurch gekennzeichnet, dass** für jeden der möglichen Pfade zwischen dem Ausgangsendgerät und einem Empfangsendgerät des Links zusätzliche topologische Bedingungen der Segregation und/oder der Kollokation dieser Pfade gegenüber bereits gerouteten oder gleichzeitig mit dem Link zu routenden virtuellen Links oder Schaltern des Netzes angewendet werden ($520_1$, ..., $520_K$).

8.  Routing-Verfahren nach Anspruch 6, **dadurch gekennzeichnet, dass** der Auswahlschritt zusätzliche topologische Bedingungen berücksichtigt, wobei jede zusätzliche topologische Bedingung sich auf eine Gruppe von Pfaden bezieht, die konstituierender Bestandteil einer Einheit von gleichzeitig zu routenden virtuellen Links sind, wobei die Gruppe aus einer Vielzahl $N_{sg}$ von Teilgruppen der Pfade besteht, wobei die zusätzliche Bedingung ausdrückt, dass maximal eine Anzahl $n_{sg}$ von Teilgruppen, derart, dass gilt $0 \leq n_{sg} < N_{sg}$, ungültig gemacht werden können, wobei eine Teilgruppe ungültig gemacht wird, wenn alle Pfade, die zu ihr gehören, vom Ausfall des gleichen Schalters des Netzes betroffen sind.

9.  Routing-Verfahren nach Anspruch 6, 7 oder 8, **dadurch gekennzeichnet, dass** die Kostenfunktion die Anzahl von Schaltern ist, die von einem Pfad durchquert werden, und dass sie auf jede Einheit von möglichen Pfaden zwischen dem Ausgangsendgerät und einem Empfangsendgerät des Links minimiert wird ($530_1$, ..., $530_K$), um mindestens einen Kandidat-Pfad pro Empfangsendgerät zu liefern.

10. Routing-Verfahren nach Anspruch 9, **dadurch gekennzeichnet, dass** Kombinationen von K Kandidat-Pfaden durchgeführt werden (540), wobei K die Anzahl von Empfangsendgeräten des Links ist, wobei jede Kombination einer möglichen Routing-Lösung des Mehrpunkt-Links entspricht, und dass eine zweite Kostenfunktion auf die Einheit der so erhaltenen möglichen Lösungen minimiert wird (550).

11. Routing-Verfahren nach Anspruch 10, **dadurch gekennzeichnet, dass** die zweite Kostenfunktion für jede mögliche Lösung die Anzahl von Schaltern ermittelt, die von ihren konstituierenden Pfaden gemeinsam genutzt werden.

12. Routing-Verfahren nach Anspruch 1, **dadurch gekennzeichnet, dass** für mindestens eine Gruppe von Links, die an der Durchführung einer gleichen Funktion beteiligt sind, Bündel von Links genannt, wobei jeder Link Punkt-zu-Punkt und das Netz in unterschiedliche Zonen partitioniert ist, für jeden der Links des Bündels ($620_1$, ..., $620_N$) an jeden möglichen Pfad zwischen dem Ausgangsendgerät und dem Empfangsendgerät des Links eine Bedingung des Nichtüberschreitens einer Grenze zwischen Zonen, wenn die mit dem Ausgangsendgerät bzw. dem Empfangsendgerät verbundenen Schalter zur gleichen Zone gehören, und im gegenteiligen Fall eine Bedingung des einmaligen Überschreitens der Grenze zwischen den Zugehörigkeitszonen des Ausgangsendgeräts bzw. des Empfangsendgeräts angewendet wird.

13. Routing-Verfahren nach Anspruch 12, **dadurch gekennzeichnet, dass** für jeden virtuellen Link und für jeden der möglichen Pfade zwischen dem Ausgangsendgerät und dem Empfangsendgerät des Links zusätzliche topologische Bedingungen der Segregation und/oder der Kollokation dieser Pfade gegenüber bereits gerouteten oder gleichzeitig mit dem Link zu routenden virtuellen Links oder Schaltern des Netzes angewendet werden ($620_1$, ..., $620_K$).

14. Routing-Verfahren nach Anspruch 12, **dadurch gekennzeichnet, dass** der Auswahlschritt zusätzliche topologische Bedingungen berücksichtigt, wobei jede zusätzliche topologische Bedingung sich auf eine Gruppe von Pfaden bezieht, die konstituierende Bestandteile einer Einheit von gleichzeitig zu routenden virtuellen Links sind, wobei die Gruppe aus einer Vielzahl $N_{sg}$ von Teilgruppen der Pfade besteht, wobei die zusätzliche Bedingung ausdrückt, dass maximal eine Anzahl $n_{sg}$ von Teilgruppen, derart, dass gilt $0 \leq n_{sg} < N_{sg}$, ungültig gemacht werden können, wobei eine Teilgruppe ungültig gemacht wird, wenn alle Pfade, die zu ihr gehören, vom Ausfall des gleichen Schalters des Netzes betroffen sind.

15. Routing-Verfahren nach Anspruch 12, 13 oder 14, **dadurch gekennzeichnet, dass** die Kostenfunktion die Anzahl von von einem Pfad durchquerten Schaltern ist, und dass sie für jeden der Links des Bündels auf jede Einheit von möglichen Pfaden zwischen dem Ausgangsendgerät und dem Empfangsendgerät des Links minimiert wird ($630_1$, ..., $630_N$), um mindestens einen Kandidat-Pfad pro Link zu liefern.

16. Routing-Verfahren nach Anspruch 15, **dadurch gekennzeichnet, dass** Kombinationen von N Kandidat-Pfaden, wobei N die Anzahl von Links des Bündels ist, durchgeführt werden (640), wobei jede Kombination einer möglichen Routing-Lösung des Bündels entspricht, und dass eine dritte Kostenfunktion über die Gesamtheit der so erhaltenen Lösungen minimiert wird (650).

17. Routing-Verfahren nach Anspruch 16, **dadurch gekennzeichnet, dass** die dritte Kostenfunktion für jede mögliche Routing-Lösung des Bündels die Anzahl von gemeinsam genutzten Schaltern zwischen den Pfaden ermittelt, von denen die Lösung die Kombination ist.

18. Routing-Verfahren nach Anspruch 1, **dadurch gekennzeichnet, dass** für mindestens eine Gruppe von Links, die an der Durchführung einer gleichen Funktion beteiligt sind, Bündel von Links genannt, wobei jedes Link vom Mehrpunkt-Typ und das Netz in unterschiedliche Zonen partitioniert ist, für jeden der Links des Bündels ($720_1$, ..., $720_N$) an jeden möglichen Pfad zwischen dem Ausgangsendgerät und einem Empfangsendgerät des Links eine Bedingung des Nichtüberschreitens einer Grenze zwischen Zonen, wenn die mit dem Ausgangsendgerät bzw. dem Empfangsendgerät verbundenen Schalter zur gleichen Zone gehören, und im gegenteiligen Fall eine Bedingung des einmaligen Überschreitens der Grenze zwischen den Zugehörigkeitszonen des Ausgangsendgeräts bzw. Empfangsendgeräts angewendet wird.

19. Computerprogramm, das Softwareeinrichtungen enthält, die geeignet sind, die Schritte des Verfahrens nach einem der vorhergehenden Ansprüche durchzuführen, wenn es von einem Computer ausgeführt wird.

## Claims

1. Process for routing virtual links in a frame-switching network including a plurality of source and/or destination terminals of said frames, in which frame switches are connected to one another by physical connections, with each virtual link being defined, for a point-to-point type, by a path through said network between a source terminal and a destination terminal, and, for a multipoint type, by a plurality of paths through said network between a source terminal and a plurality of destination terminals, which process is **characterized in that**, for at least one virtual link, it includes the following steps:

   (a) selection (250), from a set of possible paths between the source terminal and the destination terminal(s), of a subset of paths satisfying at least one predetermined topological constraint, said topological constraint belonging to a set of absolute topological constraints and of relative topological constraints, the topological constraints applying to the routing of a virtual link independently of the presence of other virtual links on the network and relative topological constraints concerning the virtual links with each other ;
   (b) determination (260), among said subset, of a path for a point-to-point virtual link, or of a plurality of paths for a multipoint virtual link, minimizing at least one given cost function;
   (c) routing (295) said virtual link according to the path(s) thus determined.

2. Routing process according to claim 1, **characterized in that**, with said virtual link being a point-to-point link and the network being partitioned into distinct zones, said topological constraint is a constraint (435) prohibiting crossing between zones if the switches connected respectively to the source terminal and the destination terminal belong to the same zone, and, in the opposite case, is a constraint (437) allowing a single crossing between zones belonging respectively to said source and destination terminals.

3. Routing process according to claim 1 or 2, **characterized in that** the selection step takes into account additional topological constraints (420) of segregation and/or collocation of paths possible with respect to virtual links already routed or to be routed simultaneously with said link or switches of said network.

4. Routing process according to claim 1 or 2, **characterized in that** the selection step takes into account additional topological constraints, in which each additional topological constraint concerns a group of paths forming a set of virtual links to be routed simultaneously, in which said group is made up of a plurality $N_{sg}$ of sub-groups of said paths, and said additional constraints express that, at most, a number $n_{sg}$ of sub-groups such that $0 \le n_{sg} < N_{sg}$ can be invalidated, with a sub-group being invalidated if all of the paths belonging to it are affected by the failure of the same switch of said network.

5. Routing process according to claim 2, 3 or 4, **characterized in that** said cost function (440) is the number of switches traversed by a path.

6. Routing process according to claim 1, **characterized in that**, with said virtual link being of a multipoint type and the network being partitioned into distinct zones, a constraint ($520_1$,..,$520_K$) prohibiting crossing between zones is applied to each possible path between said source terminal and a destination terminal of said link, if the switches connected respectively to the source terminal and to said destination terminal belong to the same zone, and, in the opposite case, a constraint allowing a single crossing between the zones belonging respectively to said source and destination terminals is applied.

7. Routing process according to claim 6, **characterized in that**, in ($520_1$,..,$520_K$), for each of the possible paths between said source and destination terminal of said link, additional topological constraints of segregation and/or collocation of these paths are applied with respect to virtual links already routed or to be routed simultaneously with said link or switches.

8. Routing process according to claim 6, **characterized in that** the selection step takes into account additional topological constraints, in which each additional topological constraint concerns a group of paths forming a set of virtual links to be routed simultaneously, in which said group is made up of a plurality $N_{sg}$ of sub-groups of said paths, and said additional constraint expresses that, at most, a number $n_{sg}$ of sub-groups such that $0 \leq n_{sg} < N_{sg}$ can be invalidated, with a sub-group being invalidated if all of the paths belonging to it are affected by the failure of the same switch of said network.

9. Routing process according to claim 6, 7 or 8 **characterized in that** said cost function is the number of switches traversed by a path, and is minimized ($530_1,..,530_K$) on each set of possible paths between said source terminal and a destination terminal of said link, in order to provide at least one candidate path per destination terminal.

10. Routing process according to claim 9 **characterized in that** combinations of K candidate paths are produced (540) in which K is the number of destination terminals of the link, and each combination corresponds to a possible routing solution of said multipoint link, and a second cost function is minimized (550) on the set of said possible solutions thus obtained.

11. Routing process according to claim 10, **characterized in that** the second cost function evaluates, for each possible solution, the number of switches shared between its various constituent paths.

12. Routing process according to claim 1, **characterized in that**, for at least one group of links involved in performing the same function, referred to as a bundle of links, each link being point-to-point and the network being partitioned into distinct zones, a constraint prohibiting crossing between zones is applied, for each of the links of said bundle ($620_1,..,620_N$), to each possible path between the source terminal and the destination terminal of said link, if the switches connected respectively to the source terminal and to the destination terminal belong to the same zone, and, in the opposite case, a constraint allowing a single crossing between the zones belonging respectively to said source and destination terminals is applied.

13. Routing process according to claim 12, **characterized in that**, for each virtual link and for each of the possible paths between the source terminal and the destination terminal of said link, additional topological constraints of segregation and/or collocation of these paths are applied ($620_1,..,620_K$) with respect to virtual links already routed or to be routed simultaneously with said link or switches.

14. Routing process according to claim 12, **characterized in that** the selection step takes into account additional topological constraints, in which each additional topological constraint concerns a group of paths forming a set of virtual links to be routed simultaneously, in which said group is made up of a plurality $N_{sg}$ of sub-groups of said paths, and said additional constraints express that, at most, a number $n_{sg}$ of sub-groups such that $0 \leq n_{sg} < N_{sg}$ can be invalidated, with a sub-group being invalidated if all of the paths belonging to it are affected by the failure of the same switch of said network.

15. Routing process according to claim 12, 13 or 14, **characterized in that** said cost function is the number of switches traversed by a path and is minimized ($630_1,..,630_N$), for each of the links of said bundle, on each set of possible paths between the source terminal and the destination terminal of said link, in order to provide at least one candidate path per link.

16. Routing process according to claim 15, **characterized in that** combinations of N candidate paths where N is the number of links of said bundle are produced (640), with each combination corresponding to a possible routing solution of said bundle, and a third cost function is minimized (650) on the set of said possible solutions thus obtained.

17. Routing process according to claim 16, **characterized in that** the third cost function evaluates, for each possible routing solution of the bundle, the number of switches shared between the paths of which said solution is the combination.

18. Routing process according to claim 1, **characterized in that**, for at least one group of links involved in performing the same function, referred to as a bundle of links, with each link being of a multipoint type and the network being partitioned into distinct zones, a constraint prohibiting crossing between zones is applied, for each of the links of said bundle ($720_1,..,720_N$), to each possible path between the source terminal and the destination terminal of said link, if the switches connected respectively to the source terminal and to the destination terminal belong to the same zone, and, in the opposite case, a constraint allowing a single crossing between the zones belonging respectively to said source and destination terminals is applied.

**19.** Computer program including software means suitable for implementing the steps of the process according to one of the previous claims, when it is run on a computer.

FIG. 1

FIG. 3E

FIG. 2

FIG. 3A

FIG. 3B

FIG. 3C

FIG. 3D

FIG. 4

FIG. 5

FIG. 6

$K_1$

$710_1$

$720_1$

$730_1$

$K_2$

$710_2$

$720_2$

$730_2$

$K_N$

$710_N$

$720_N$

$730_N$

740

750

760

770

780

FIG. 7

FIG. 8

FIG. 9

FIG.10A

FIG.10B

EP 2 030 367 B1

**RÉFÉRENCES CITÉES DANS LA DESCRIPTION**

**Documents brevets cités dans la description**

- FR 2832011 A

- US 6584093 B1

**Littérature non-brevet citée dans la description**

- **JEAN-YVES LE BOUDEC.** Application of network calculus to garanteed service networks. *IEEE Trans. on Information Theory,* Mai 1998, vol. 44 (3